(19) Europäisches Patentamt
European Patent Office
Office européen des brevets

(11) **EP 2 860 812 B1**

(12) **EUROPEAN PATENT SPECIFICATION**

(45) Date of publication and mention
of the grant of the patent:
**28.12.2016 Bulletin 2016/52**

(51) Int Cl.:
**H01M 10/0567** (2010.01)  **H01M 10/052** (2010.01)
**H01M 10/0568** (2010.01)

(21) Application number: **13797645.2**

(22) Date of filing: **29.05.2013**

(86) International application number:
**PCT/JP2013/064904**

(87) International publication number:
**WO 2013/180175 (05.12.2013 Gazette 2013/49)**

(54) **ELECTROLYTE SOLUTION FOR NONAQUEOUS ELECTROLYTE BATTERIES, AND NONAQUEOUS ELECTROLYTE BATTERY USING SAME**

ELEKTROLYTLÖSUNG FÜR BATTERIEN MIT NICHTWÄSSRIGEM ELEKTROLYTEN SOWIE BATTERIEN MIT NICHTWÄSSRIGEM ELEKTROLYTEN MIT DIESER LÖSUNG

SOLUTION D'ÉLECTROLYTE POUR BATTERIES À ÉLECTROLYTE NON AQUEUX ET BATTERIE À ÉLECTROLYTE NON AQUEUX L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2012 JP 2012123186**

(43) Date of publication of application:
**15.04.2015 Bulletin 2015/16**

(73) Proprietor: **Central Glass Co., Ltd.**
**Ube-shi, Yamaguchi 755-0001 (JP)**

(72) Inventors:
• **KONDO, Yuki**
**Ube-shi**
**Yamaguchi 755-0001 (JP)**
• **NAKAHARA, Keita**
**Ube-shi**
**Yamaguchi 755-0001 (JP)**
• **MURAMOTO, Satoshi**
**Ube-shi**
**Yamaguchi 755-0001 (JP)**
• **MORINAKA, Takayoshi**
**Ube-shi**
**Yamaguchi 755-0001 (JP)**

(74) Representative: **Manitz, Finsterwald & Partner GbR**
**Martin-Greif-Strasse 1**
**80336 München (DE)**

(56) References cited:
WO-A1-2010/079565    JP-A- H0 428 171
JP-A- H0 428 171     JP-A- 2004 111 349
JP-A- 2004 111 349    JP-A- 2006 127 933
JP-A- 2008 004 503    JP-A- 2013 120 659
US-A1- 2006 269 844

**Description**

Technical Field:

The present invention relates to an electrolytic solution for a nonaqueous electrolyte battery constituting a nonaqueous electrolyte secondary battery having excellent cycle characteristics and storage stability, as well as a nonaqueous electrolyte battery using the same.

Background Art:

Recently, electrical storage systems for information-related equipment or telecommunication equipment, i.e., electrical storage systems for equipment having a small size and requiring a high energy density, such as personal computers, video cameras, digital still cameras and cellular phones, as well as electrical storage systems for equipment having a large size and requiring a high electric power, such as electric automobiles, hybrid vehicles, auxiliary power supplies for fuel cell vehicles and electricity storages, have been attracting attentions. As candidates, nonaqueous electrolyte batteries, such as lithium-ion batteries lithium batteries, and lithium-ion capacitors, have been actively developed.

In general, such a nonaqueous electrolyte battery employs a nonaqueous electrolytic solution or a nonaqueous electrolytic solution solidified by a gelling agent as an ionic conductor. In nonaqueous electrolytic solutions, as a nonaqueous solvent, used is a solvent selected from aprotic ethylene carbonate, propylene carbonate, dimethyl carbonate, diethyl carbonate, ethyl methyl carbonate and the like, or a mixed solvent thereof; and as a solute, used is a fluorine-containing lithium salt such as $LiPF_6$, $LiBF_4$, $LiN(CF_3SO_2)_2$ or $LiN(C_2F_5SO_2)_2$.

When such a fluorine-containing lithium salt is used as a solute, however, free fluorine ions remain in the nonaqueous electrolytic solution as an impurity in the process of producing the nonaqueous electrolytic solution. Therefore, the internal resistance of the nonaqueous electrolyte battery is increased by repeating charge and discharge of the battery over a long period of time or by storing the battery at high temperature for a long time, resulting in a difficulty of discharge. The reason of this problem is believed as follows: the fluorine ions contained as an impurity in the nonaqueous electrolytic solution react with lithium on the anode to form a passive state film, such as LiF, on the surface of the anode, and the film increases the internal resistance. Furthermore, it is also believed that fluorine ions accelerate decomposition of the solute or the solvent or cause corrosion of the battery can material. For these reasons, while many nonaqueous electrolyte batteries have been already put into practical use, the durability is unsatisfactory in many uses. In particular, since the use thereof in an environment at 45°C or more enhances the deterioration, the use thereof in an environment of high temperature over a long period of time, such as the use for automobiles, causes a problem, and a reduction in the concentration of fluorine ions remaining in a nonaqueous electrolytic solution has been demanded.

Japanese Patent No. 2983580 (Patent Literature 1) discloses the findings that the cycle characteristics and high-temperature storage characteristics of a nonaqueous electrolyte secondary battery can be improved by reducing the concentration of free fluorine ions to 50 mass ppm or less based on the total mass of the electrolytic solution. As a method for reducing the amount of fluorine ions contained in a nonaqueous electrolytic solution, Japanese Patent No. 2950924 (Patent Literature 2) proposes a method for reducing the concentration of fluorine ions by adding a nitrate or sulfate of a metal, such as $Ca(NO_3)_2$ or $MgSO_4$, to a nonaqueous electrolytic solution. However, in this method, the salt or oxide of a metal other than lithium added to a nonaqueous electrolytic solution is dissolved in the nonaqueous electrolytic solution. In a lithium secondary battery, the presence of a metal other than lithium in the electrolytic solution causes a problem of reducing the cycle characteristics and high-temperature storage characteristics of the battery. On the other hand, Japanese Patent No. 3077218 (Patent Literature 3) proposes a method for reducing the amount of hydrogen fluoride by adding a metal oxide such as BaO to a nonaqueous electrolytic solution; and Japanese Patent Laid-open Publication No. 2002-343364 (Patent Literature 4) proposes a method for removing hydrogen fluoride generated by the presence of moisture inside a battery by adding silicon dioxide to the cathode and/or the anode and/or the nonaqueous electrolytic solution inside the battery. However, it was conventionally known that the reaction of a metal oxide and hydrogen fluoride generates a metal fluoride and water. It was also known that an electrolyte containing a fluorine-containing lithium salt, such as $LiPF_6$ or $LiBF_4$, as the solute reacts with water to generate hydrogen fluoride. Thus, in these methods, the reaction of a metal oxide and hydrogen fluoride generates water, and the generated water hydrolyzes the electrolyte. It is therefore believed that the concentration of hydrogen fluoride increases again with time.

US 2006/269844 A1 discloses a method of reducing at least one of the water content or the acid content in a non-aqueous electrolytic solution for a secondary battery comprising contacting the non-aqueous electrolytic solution with a triazine compound, wherein the triazine compound has the formula $2-R^1-4-R^2-6-R^3-1, 3, 5$-triazine, wherein $R^1$, $R^2$, and $R^3$ are independently selected from the group consisting of hydrogen, halogen, $C_{1-20}$-alkyl, $C^{1-20}$-alkenyl, phenyl and substituted phenyl.

JP 2004-111,349 A relates to an electrochemical device, which has a non-aqueous electrolyte or a gel electrolyte containing a solvent that is decomposed at potential that is equal to or less than 2V(Li/Li<SP>+</SP>pair) on a negative electrode as the negative electrode, a positive electrode, a separator, and the solvent.

Prior Art Publications:

Patent Literature

Patent Literature 1: Japanese Patent No. 2983580
Patent Literature 2: Japanese Patent No. 2950924
Patent Literature 3: Japanese Patent No. 3077218
Patent Literature 4: Japanese Patent Laid-open Publication No. 2002-343364

Summary of Invention:

Technical Problem

The present invention provides an electrolytic solution for a nonaqueous electrolyte battery and a nonaqueous electrolyte battery having excellent cycle characteristics and high-temperature storage characteristics without causing hydrolysis of a fluorine-containing lithium salt, such as $LiPF_6$, contained as a solute and containing a less amount of free fluorine ions, as well as a method for producing the electrolytic solution for a nonaqueous electrolyte battery.

Problem to Be Resolved by the Invention:

The present inventors have found an electrolytic solution for a nonaqueous electrolyte battery comprising a nonaqueous solvent and at least one fluorine-containing lithium salt as a solute (hereinafter, also referred to as simply "nonaqueous electrolytic solution" or "electrolytic solution") which can reduce the content of free fluorine ions and have excellent cycle characteristics and high-temperature storage characteristics by containing an oxalato salt having a specific composition, as well as a nonaqueous electrolyte battery using the electrolytic solution, and have eventually accomplished the present invention.

That is, the present invention relates to an electrolytic solution for a nonaqueous battery including a nonaqueous solvent and at least one fluorine-containing lithium salt as a solute and further including an oxalato salt represented by Formula (1) below, wherein the content of a hexafluoro salt represented by Formula (2) below is 150 mass ppm or less;

$$Li_xMF_{(6-2y)}(C_2O_4)_y \qquad (1)$$

$$Li_xMF_6 \qquad (2)$$

wherein M represents Fe, Sn, Si, Ge or Ti; x is 3 when M is Fe, and 2 when M is Sn, Si, Ge or Ti; and y is an integer of 1 to 3, wherein the content of the oxalato salt is 6500 mass ppm or less and wherein the content of free fluorine ions is 50 mass ppm or less,
wherein the oxalato salt represented by formula (1) reacts with free fluorine ions contained in the electrolytic solution to generate the hexafluoro salt represented by formula (2).

The oxalato salt is preferably at least one tris(oxalato) compound selected from the group consisting of $Li_3Fe(C_2O_4)_3$, $Li_2Sn(C_2O_4)_3$, $Li_2Si(C_2O_4)_3$, $Li_2 Ge(C_2O_4)_3$, and $Li_2 Ti (C_2O_4)_3$ .

The solute is preferably at least one lithium salt selected from the group consisting of lithium hexafluorophosphate ($LiPF_6$), lithium tetrafluoroborate ($LiBF_4$), lithium bis(trifluoromethanesulfonyl)imide ($LiN(CF_3SO_2)_2$), lithium bis(fluorosulfonyl)imide ($LiN(FSO_2)_2$), lithium bis(pentafluoroethanesulfonyl)imide ($LiN(C_2F_5SO_2)_2$), lithium difluoro(oxalato)borate ($LiBF_2(C_2O_4)$), lithium difluoro(bis(oxalato))phosphate ($LiPF_2(C_2O_4)_2$), lithium tetrafluoro(oxalato)phosphate ($LiPF_4(C_2O_4)$) and lithium difluorophosphate ($LiPO_2 F_2$).

The nonaqueous solvent is preferably at least one nonaqueous solvent selected from the group consisting of cyclic carbonates, chain carbonates, cyclic esters, chain esters, cyclic ethers, chain ethers, sulfur-containing nonaqueous solvents and ion liquids.

The present invention also relates to a nonaqueous electrolyte battery including at least a cathode, an anode, and an electrolytic solution for a nonaqueous electrolyte battery comprising a nonaqueous solvent and at least one fluorine-containing lithium salt as a solute, wherein the electrolytic solution for a nonaqueous electrolyte battery is as described above.

The present invention also relates to a method for producing the electrolytic solution for a nonaqueous electrolyte battery described above, comprising a step of preparing a solution containing 200 mass ppm or less of free fluorine ions by dissolving at least one fluorine-containing lithium salt as a solute in a nonaqueous solvent, and a reaction step of reacting the free fluorine ions in the solution with an oxalato salt represented by Formula (2) by adding the oxalato salt to the solution, wherein the oxalato salt represented by formula (1) reacts with free fluorine ions contained in the electrolytic solution to generate the hexafluoro salt represented by formula (2).

The production method can prepare an electrolytic solution for a nonaqueous electrolyte battery containing 150 mass ppm or less of the hexafluoro salt represented by Formula (1), 6500 mass ppm or less of the oxalato salt, and 50 mass ppm or less of free fluorine ions.

In the production method, the oxalato salt is preferably added to the solution such that the molar ratio of the oxalato salt to the free fluorine ions is 0.02 to 2.0.

The production method preferably further includes a filtration step of removing the solid content of a reaction product.

The oxalato salt is preferably at least one tris(oxalato) compound selected from the group consisting of $Li_3Fe(C_2O_4)_3$, $Li_2Sn(C_2O_4)_3$, $Li_2Si(C_2O_4)_3$, Li2Ge($C_2O_4$)$_3$ and $Li_2Ti(C_2O_4)_3$.

In the production method, the solute is preferably at least one lithium salt selected from the group consisting of lithium hexafluorophosphate ($LiPF_6$), lithium tetrafluoroborate ($LiBF_4$), lithium bis(trifluoromethanesulfonyl)imide ($LiN(CF_3SO_2)_2$), lithium bis(fluorosulfonyl)imide ($LiN(FSO_2)_2$), lithium bis(pentafluoroethanesulfonyl)imide ($LiN(C_2F_5SO_2)_2$), lithium difluoro(oxalato)borate ($LiBF_2(C_2O_4)$), lithium difluoro(bis(oxalato))phosphate ($LiPF_2(C_2O_4)_2$), lithium tetrafluoro(oxalato)phosphate ($LiPF_4(C_2O_4)$) and lithium difluorophosphate ($LiPO_2F_2$).

In the production method, the nonaqueous solvent is preferably at least one nonaqueous solvent selected from the group consisting of cyclic carbonates, chain carbonates, cyclic esters, chain esters, cyclic ethers, chain ethers, sulfur-containing nonaqueous solvents and ion liquids.

Effects by the Invention:

The present invention can provide an electrolytic solution for a nonaqueous electrolyte battery and a nonaqueous electrolyte battery having excellent cycle characteristics and high-temperature storage characteristics without causing hydrolysis of a fluorine-containing lithium salt, such as $LiPF_6$, contained as a solute and containing a less amount of free fluorine ions, as well as a method for producing the electrolytic solution for a nonaqueous electrolyte battery.

Brief Description of Drawings:

Fig. 1 is a graph showing discharge capacity retention rates after 500 cycles in Examples 1-1 to 1-66 and Comparative Examples 1-1 to 1-6.

Fig. 2 is a graph showing discharge capacity retention rates after 10 days storage in Examples 1-1 to 1-66 and Comparative Examples 1-1 to 1-6.

Fig. 3 is a graph showing discharge capacity retention rates after 500 cycles in Examples 1-67 to 1-74, Comparative Examples 1-7 to 1-10, Examples 2-1 to 2-12, Comparative Examples 2-1 to 2-6, Examples 3-1 to 3-8, Comparative Examples 3-1 to 3-4, Examples 4-1 to 4-4, and Comparative Examples 4-1 and 4-2.

Fig. 4 is a graph showing discharge capacity retention rates after 10 days storage in Examples 1-67 to 1-74, Comparative Examples 1-7 to 1-10, Examples 2-1 to 2-12, Comparative Examples 2-1 to 2-6, Examples 3-1 to 3-8, Comparative Examples 3-1 to 3-4, Examples 4-1 to 4-4, and Comparative Examples 4-1 and 4-2.

Description of Embodiments:

The present invention will now be described in detail below. The present electrolytic solution for a nonaqueous electrolyte battery comprising a nonaqueous solvent and at least one fluorine-containing lithium salt as a solute further comprises an oxalato salt represented by Formula (1) such that the content of a hexafluoro salt represented by Formula (2) is 150 mass ppm or less, the content of the oxalato salt is 6500 mass ppm or less, and the content of free fluorine ions is 50 mass ppm or less. The electrolytic solution for a nonaqueous electrolyte battery can optionally contain another well-known additive. In the present electrolytic solution for a nonaqueous electrolyte battery, the oxalato salt reacts with free fluorine ions contained in the electrolytic solution to generate the hexafluoro salt represented by Formula (2), which does not adversely affect the battery performance, to reduce the amount of free fluorine ions without causing hydrolysis of the fluorine-containing lithium salt, such as $LiPF_6$, contained as a solute. As a result, the battery performance is prevented from being deteriorated by fluorine ions, and the cycle characteristics and the high-temperature storage characteristics of the nonaqueous electrolyte battery including the nonaqueous electrolytic solution of the present invention can be improved. In addition, the hexafluoro salt can be removed from the nonaqueous electrolytic solution by a filtration step, but if the amount is small, the hexafluoro salt does not adversely affect the battery performance even if it is not removed.

Each component of the electrolytic solution for a nonaqueous electrolyte battery of the present invention will now be described in detail. The present invention relates to an electrolytic solution for a nonaqueous battery containing a nonaqueous solvent and at least one fluorine-containing lithium salt as a solute. The electrolytic solution further contains an oxalato salt represented by Formula (1) such that the content of a hexafluoro salt represented by Formula (2) is 150 mass ppm or less, the content of the oxalato salt is 6500 mass ppm or less, and the content of free fluorine ions is 50 mass ppm or less. An oxalato salt having a larger number of oxalic acid groups can treat a larger number of fluorine ions per 1 mol of the oxalato salt and can achieve the treatment with a smaller amount of the oxalato salt. Accordingly, preferred oxalato salts are tris(oxalato) salts such as $Li_3Fe(C_2O_4)_3$, $Li_2Sn(C_2O_4)_3$, $Li_2Si(C_2O_4)_3$, $Li_2Ge(C_2O_4)_3$ and $Li_2Ti(C_2O_4)_3$. If the content of free fluorine ions in the electrolytic solution for a nonaqueous electrolyte battery is higher than 50 mass ppm, the internal resistance of the battery is increased by repeating charge and discharge of the nonaqueous electrolyte battery including the electrolytic solution over a long period of time or by storing the battery at high temperature for a long time, resulting in a difficulty of discharge (deterioration in cycle characteristics and high-temperature storage characteristics). In contrast, a content of the fluorine ions of 50 mass ppm or less can provide excellent cycle characteristics and high-temperature storage characteristics. The content of the fluorine ions is more preferably 45 mass ppm or less and most preferably 40 mass ppm or less.

The hexafluoro salt contained in the electrolytic solution for a nonaqueous electrolyte battery is generated by the reaction of the oxalato salt with fluorine ions. The content of the hexafluoro salt is 150 mass ppm or less so that the hexafluoro salt can be dissolved in the electrolytic solution. If the content is higher than 150 mass ppm, the nonaqueous electrolyte battery produced using the electrolytic solution has a risk of precipitating the hexafluoro salt in the inside of the nonaqueous electrolyte battery to prevent the charge and discharge of the battery. A content of 140 mass ppm or less hardly causes the precipitation of the hexafluoro salt in the electrolytic solution even at low temperature and is therefore more preferred. Even if the content is higher than 150 mass ppm, the content of the hexafluoro salt in the electrolytic solution can be reduced to 150 mass ppm or less by removing the solid of the hexafluoro salt by filtration of the electrolytic solution.

If the content of the oxalato salt contained in the electrolytic solution for a nonaqueous electrolyte battery is higher than 6500 mass ppm, the cycle characteristics and high-temperature storage characteristics of the resulting electrolytic solution are low. The oxalato salt reacts with fluorine ions to reduce the concentration of the fluorine ions. There may be a case in which all of the oxalato salt is consumed by the reaction and the finally obtained electrolytic solution for a nonaqueous electrolyte battery does not contain the oxalato salt. However, because of the easiness of sufficiently reducing the final number of free fluorine ions, i.e., because of the easiness of reducing the content of free fluorine ions in the electrolytic solution to 50 mass ppm or less, the resulting electrolytic solution for a nonaqueous electrolyte battery preferably contains the oxalato salt. Accordingly, the content of the oxalato salt in the electrolytic solution for a nonaqueous electrolyte battery is preferably 10 to 6500 mass ppm and more preferably 25 to 6000 mass ppm.

The molar ratio of the addition amount of the oxalato salt to the free fluorine ions in a solution containing a nonaqueous solvent, the solute described above, and 200 mass ppm or less of the free fluorine ions is within a range of 0.02 to 2.0, preferably 0.17 to 2.0, and most preferably 0.2 to 1.5. A molar ratio of the oxalato salt to the fluorine ions of less than 0.02 tends to insufficiently reduce the number of the free fluorine ions and is therefore undesirable. In order to sufficiently reduce the number of the fluorine ions, the molar ratio of the addition amount of the oxalato salt to the fluorine ions is preferably 0.17 or more and more preferably 0.2 or more. The increase in the addition amount of the oxalato salt increases the effect of reducing the concentration of fluorine ions, but a molar ratio of higher than 2.0 has a risk that the excessive amount of the oxalato salt adversely affects the battery performance. In addition, an increase in the addition amount of the oxalato salt increases the raw material cost. Accordingly, the molar ratio of the addition amount to the fluorine ions is preferably 2.0 or less and more preferably 1.5 or less. The reaction step of adding an oxalato salt to the solution described above and reacting the oxalato salt with free fluorine ions in the solution is preferably performed with stirring of the solution. The temperature of the solution during the reaction is not particularly limited and is preferably -20°C to 80°C and more preferably 0°C to 60°C.

In order to produce an electrolytic solution, in the solution prepared using a nonaqueous solvent and the above-mentioned solute (electrolyte), the sum of the amount of the free fluorine ions remaining in the solute and the amount of fluorine ions newly generated by hydrolysis of the solute by the moisture contaminated in the step of preparing the solution is usually about 100 mass ppm based on the total amount of the solution. As a rare case, the concentration of fluorine ions in the solution is increased to about 200 mass ppm by contamination of a large amount of moisture from the outside. The concentration of fluorine ions may be further increased to higher than 200 mass ppm by further contamination of a large amount of moisture. When such a high concentration of fluorine ions is treated with an oxalato salt such as $Li_3Fe(C_2O_4)_3$, a large amount of solid content such as a hexafluoro salt, $Li_3FeF_6$, is generated as a reaction product. Consequently, in order to obtain only a nonaqueous electrolytic solution, it is necessary to remove the solid content by filtration. However, since the filterability of a nonaqueous electrolytic solution containing a large amount of the solid content is very low, the productivity of the nonaqueous electrolytic solution is significantly reduced. It is therefore not desirable to reduce the concentration of fluorine ions by adding an oxalate salt to the solution containing a nonaqueous solvent and the solute and also containing free fluorine ions in an amount higher than 200 mass ppm. On the other hand, even in a solution containing 50 mass ppm or less of fluorine ions, the amount of fluorine ions can be further reduced by adding an oxalato salt to the solution. The filtration step can be performed with, for example, a pressure filter, vacuum filter or filter press using a filter cloth or cartridge filter; a precipitator or filtration separator by centrifugation; or a cross-flow filter using an ultrafilter. The filterability is judged by the average amount ($kg/(m^2 \cdot sec)$) of the nonaqueous electrolytic solution that can be filtrated by filtration using a filter with a filtration area of 1 $m^2$ for 1 hour. A filtration rate of 1 $kg/(m^2 \cdot sec)$ or more is preferred, and 3 $kg/(m^2 \cdot sec)$ or more is further preferred. Hereinafter, the average amount of the nonaqueous electrolytic solution that can be filtrated for 1 hour from the start of the filtration may be referred to as simply "filterability." The resulting nonaqueous electrolytic solution after the filtration may be further subjected to, for example, concentration, dilution with a nonaqueous solvent, or addition of an additive described below to the electrolytic solution.

The nonaqueous solvent contained in the present electrolytic solution for a nonaqueous electrolyte battery may be any appropriate nonaqueous solvent without any specific limitation. Examples of the solvent include cyclic carbonates such as propylene carbonate, ethylene carbonate and butylene carbonate; chain carbonates such as diethyl carbonate, dimethyl carbonate and ethyl methyl carbonate; cyclic esters such as $\gamma$-butyrolactone and $\gamma$-valerolactone; chain esters such as methyl acetate and methyl propionate; cyclic ethers such as tetrahydrofuran, 2-methyltetrahydrofuran and dioxane; chain ethers such as dimethoxyethane and diethyl ether; and sulfur-containing nonaqueous solvents such as dimethyl sulfoxide and sulfolane. Although the category is different from the nonaqueous solvent, ion liquids can also be used. In the present invention, these nonaqueous solvents may be used alone or in appropriate combination at an appropriate ratio depending on the use. Among these solvents, particularly preferred are propylene carbonate, ethylene carbonate, diethyl carbonate, dimethyl carbonate and ethyl methyl carbonate, from the viewpoint of the electrochemical stability against redox and the chemical stability against heat and a reaction with the solute.

The solute contained in the present electrolytic solution for a nonaqueous electrolyte battery may be any appropriate fluorine-containing lithium salt without any specific limitation. Examples of the solute include electrolyte lithium salts such as $LiPF_6$, $LiBF_4$, $LiAsF_6$, $LiSbF_6$, $LiCF_3SO_3$, $LiN(CF_3SO_2)_2$, $LiN(FSO_2)_2$, $LiN(C_2F_5SO_2)_2$, $LiN(CF_3SO_2)(C_4F_9SO_2)$, $LiC(CF_3SO_2)_3$, $LiPF_3(C_3F_7)_3$, $LiB(CF_3)_4$, $LiBF_3(C_2F_5)$, $LiBF_2(C_2O_4)$, $LiPF_2(C_2O_4)_2$, $LiPF_4(C_2O_4)$ and $LiPO_2F_2$. These solutes may be used alone or in appropriate combination at an appropriate ratio depending on the use. In particular, $LiPF_6$, $LiBF_4$, $LiN(CF_3SO_2)_2$, $LiN(FSO_2)_2$, $LiN(C_2F_5SO_2)_2$, $LiBF_2(C_2O_4)$, $LiPF_2(C_2O_4)_2$, $LiPF_4(C_2O_4)$ and $LiPO_2F_2$ are preferred on the basis of, for example, the energy density, output characteristics, and life span as a battery. Furthermore, an electrolyte lithium salt such as $LiClO_4$ or $LiB(C_2O_4)_2$ may be further added to the electrolytic solution as a solute in addition to the above-mentioned solute.

These solutes may be used at any concentration without any particular limitation. The lower limit is 0.5 mol/L or more, preferably 0.7 mol/L or more, and most preferably 0.9 mol/L or more; and the upper limit is 2.5 mol/L or less, preferably 2.0 mol/L or less, and most preferably 1.5 mol/L or less. A concentration of less than 0.5 mol/L tends to reduce the cycle characteristics and output characteristics of the nonaqueous electrolyte battery due to a reduction in ionic conductance. In contrast, a concentration of higher than 2.5 mol/L tends to reduce the ionic conductance due to an increase in the viscosity of the electrolytic solution for a nonaqueous electrolyte battery and has a risk of reducing the cycle characteristics and output characteristics of the nonaqueous electrolyte battery.

The fundamental components of the present electrolytic solution for a nonaqueous electrolyte battery have been described above. The electrolytic solution for a nonaqueous electrolyte battery of the present invention may further contain additives that are usually used in electrolytic solutions at appropriate ratios that do not impair the gist of the present invention. Examples of the additives include compounds having overcharge preventing effect, anode film forming effect and cathode protecting effect, such as cyclohexylbenzene, biphenyl, t-butylbenzene, vinylene carbonate, vinylethylene carbonate, difluoroanisole, fluoroethylene carbonate, propane sultone and dimethylvinylene carbonate. The present electrolytic solution for a nonaqueous electrolyte battery can also be used by being coagulated with a gelling agent or a crosslinked polymer, as used in a nonaqueous electrolyte battery called a lithium polymer battery.

The constitution of the nonaqueous electrolyte battery of the present invention will now be described. The nonaqueous electrolyte battery of the present invention is characterized by the use of the above-described electrolytic solution for a nonaqueous electrolyte battery of the present invention. The other constitutional members are those used in common nonaqueous electrolyte batteries. That is, the battery comprises a cathode and an anode, capable of occluding and releasing lithium ions, an electric collector, a separator, a container and the like.

The anode material is not particularly limited, and examples thereof include lithium metal, alloys or intermetallic compounds of lithium and other metals, various carbon materials, artificial graphite, natural graphite, metal oxides, metal nitrides, tin (simple substance), tin compounds, silicon (simple substance), silicon compounds, activated carbon and conductive polymers.

The cathode material is not particularly limited, and examples thereof in lithium batteries and lithium ion batteries include lithium-containing transition metal complex oxides, such as $LiCoO_2$, $LiNiO_2$, $LiMnO_2$ and $LiMn_2O_4$; these lithium-containing transition metal complex oxides having a mixture of a plurality of transition metals such as Co, Mn, and Ni; these lithium-containing transition metal complex oxides having a metal, other than the transition metals, substituted for a part of the transition metal; phosphate compounds of transition metals, such as $LiFePO_4$, $LiCoPO_4$ and $LiMnPO_4$ called olivine; oxides such as $TiO_2$, $V_2O_5$ and $MoO_3$; sulfides such as $TiS_2$ and FeS; conductive polymers such as polyacetylene, polyparaphenylene, polyaniline, and polypyrrole; activated carbon; polymers generating radicals; and carbon materials.

The cathode and anode materials can be formed into electrode sheets using a conductive material, such as acetylene black, Ketjen black, carbon fibers or graphite, and a binder, such as polytetrafluoroethylene, polyvinylidene fluoride or a SBR resin.

The separator for preventing the contact between the cathode and the anode can be nonwoven fabric or a porous sheet made of, for example, polypropylene, polyethylene, paper or glass fibers.

Each element described above is assembled into a nonaqueous electrolyte battery having a shape of, for example, a coin, a cylinder, a square, or an aluminum lamination sheet.

Examples:

The present invention will now be specifically described by way of the following examples, but is not limited to those examples.

[Example 1-1]

Using a mixed solvent of ethylene carbonate with ethyl methyl carbonate at a volume ratio of 1:2 as a nonaqueous solvent, $LiPF_6$ was dissolved as a solute in the nonaqueous solvent, to give a solution with a concentration of 1.0 mol/L of the solute. Hydrogen fluoride was added to the electrolytic solution wherein the fluorine ion concentration thereof had been controled to 5 mass ppm by passing the solution through a column filled with an ionexchange resin, so as to control the concentration of fluorine ions to 30 mass ppm. By the process described above, a solution containing 200 mass ppm or less of free fluorine ions and a fluorine-containing lithium salt as a solute in a nonaqueous solvent was prepared. Hereinafter, a solution having a fluorine ion concentration controlled as described above, i.e., a solution before a reduction in a fluorine ion concentration by an oxalato salt, may be referred to as "initial solution".

Subsequently, an oxalato salt, $Li_3Fe(C_2O_4)_3$, was added to the initial solution at a molar ratio of $Li_3Fe(C_2O_4)_3$ to fluorine ions of 0.01. The solution was stirred at 25°C for 1 hour and was then subjected to pressure filtration at 0.4 MPa through a polytetrafluoroethylene filter having a pore size of 0.5 $\mu$m to obtain an electrolytic solution for a nonaqueous battery. At this stage, the filterability was 3 kg/($m^2$·sec), which was satisfactory filterability. Furthermore, the concentrations of fluorine ions in the electrolytic solution for a nonaqueous electrolyte battery measured at about 1 hour and about 24 hours after the filtration were both 27 mass ppm. Thus, the concentration of fluorine ions was sufficiently reduced, and the reduced concentration was stably maintained. The amounts of moisture in the electrolytic solution for a nonaqueous electrolyte battery measured at about 1 hour and about 24 hours after the filtration were both low, 4 mass ppm. The concentrations of fluorine ions were measured by ion chromatography (ICS-3000 (column: Ion Pac AG-17/AS-14), manufactured by Dionex Corporation). The amounts of moisture were measured with an apparatus for measuring trace amounts of moisture (Karl-Fischer moisture meter MKC-610, manufactured by Kyoto Electronics Manufacturing Co., Ltd.). The concentrations of $Li_3FeF_6$ and $Li_3Fe(C_2O_4)_3$ in the electrolytic solutions were determined as follows. The concentration of $Li_3FeF_6$ in the electrolytic solution was determined by $^{19}F$ NMR. Then, the sum of concentrations of Fe in $Li_3FeF_6$ and $Li_3Fe(C_2O_4)_3$ was measured by ICP-AES (ICPS8100CL, manufactured by Shimadzu Corporation). The difference between the sum of the concentrations of Fe and the concentration of Fe derived from $Li_3FeF_6$ calculated from the concentration of $Li_3FeF_6$ determined by NMR was defined as the concentration of Fe derived from $Li_3Fe(C_2O_4)_3$, and the concentration of $Li_3Fe(C_2O_4)_3$ was calculated from this value. As a result, the electrolytic solution had a $Li_3FeF_6$ concentrations of 3 mass ppm and a $Li_3Fe(C_2O_4)_3$ concentration of less than minimum limit of determination. The results are shown in Table 1. The concentrations of $Li_2MF_6$ and $Li_2M(C_2O_4)_3$ (M = Sn, Si, Ge or Ti) in Comparative Examples and Examples described below were similarly measured by NMR and ICP-AES. In the electrolytic solutions for a non-aqueous electrolyte battery prepared in all Examples and Comparative Examples described below, except for Comparative Example 1-6, the concentrations of fluorine ions at about 1 hour and about 24 hours after filtration did not substantially have a difference therebetween and were stable as in Example 1-1. In each electrolytic solution for a nonaqueous electrolyte battery prepared in all Examples and Comparative Examples described below, except Comparative Example 1-5, the amounts of moisture at about 1 hour and about 24 hours after filtration did not substantially have a difference therebetween and were stable as in Example 1-1.

A cell was prepared using the prepared electrolytic solutions, $LiCoO_2$ as a cathode material and graphite as an anode material, and then the cycle characteristics and high-temperature storage characteristics of the cell were actually evaluated. The test cell was produced as follows.

Ninety parts by mass of $LiCoO_2$ powder was mixed with 5 parts by mass of polyvinylidene fluoride (PVDF) as a binder and 5 parts by mass of acetylene black as a conductive material. N-Methylpyrrolidone was added to the mixture to form a paste. The paste was applied onto aluminum foil, followed by drying it to give a cathode body for tests. Separately, 90 parts by mass of a graphite powder was mixed with 10 parts by mass of polyvinylidene fluoride (PVDF) as a binder. N-Methylpyrrolidone was added to the mixture to form a slurry. This slurry was applied onto copper foil, followed by drying at 150°C for 12 hours to give an anode body for tests. A polyethylene separator was impregnated with the electrolytic solution to assemble a 50 mAh cell of an aluminum laminated exterior.

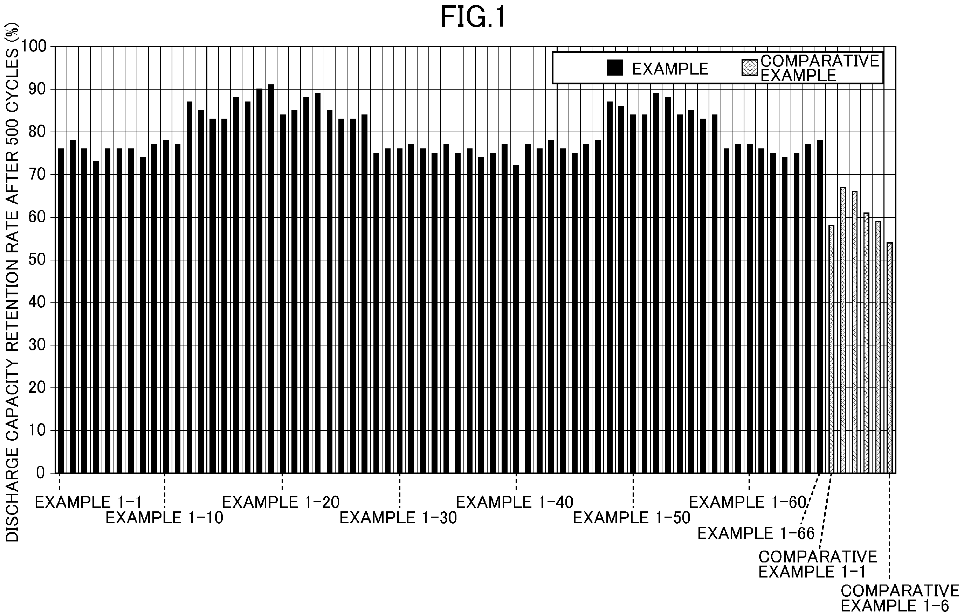

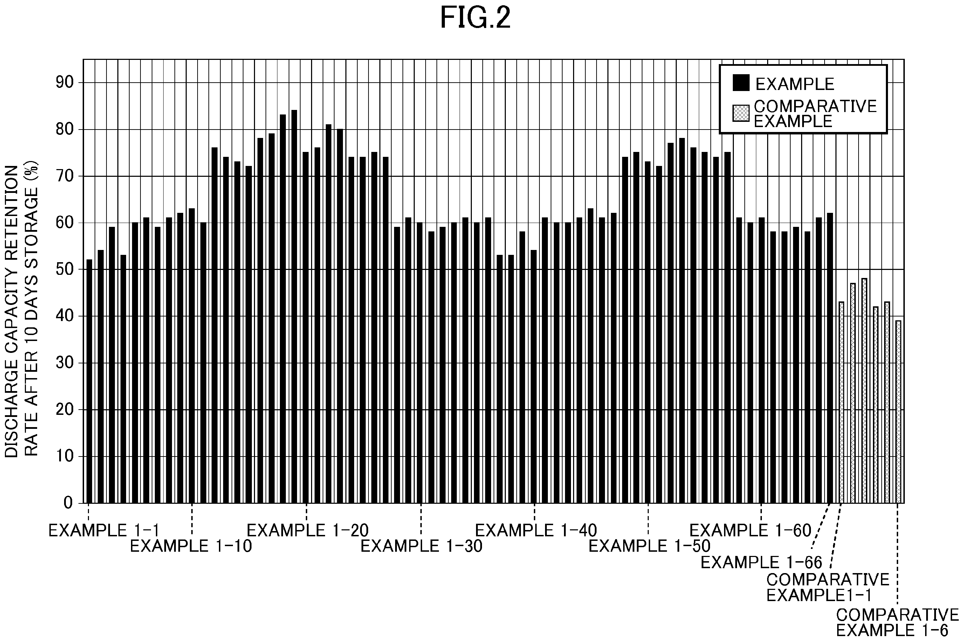

The cell produced by the method described above was subjected to a charge-discharge test at an environmental temperature of 60°C to evaluate the cycle characteristics and high-temperature storage characteristics. The charge and discharge were both performed at a current density of 0.35 $mA/cm^2$; and a charge-discharge cycle of charging up to 4.2 V, retention at 4.2 V for 1 hour and discharging down to 3.0 V was repeated. The degree of deterioration of the cell was evaluated by the discharge capacity retention rate after 500 cycles (evaluation of cycle characteristics). Separately, a storage stability test was performed at an environmental temperature of 60°C. That is, the cell was fully charged at a current density of 0.35 $mA/cm^2$ at room temperature and was then stored at an environmental temperature of 60°C for 10 days. Subsequently, the cell was discharged at a current density of 0.35 $mA/cm^2$ at room temperature. The degree of deterioration of the cell was evaluated by the discharge capacity retention rate after 10 days storage (evaluation of high-temperature storage characteristics). The discharge capacity retention rates were determined by the following equations. The results are shown in Table 2 and Figs. 1 and 2.

<Discharge capacity retention rate after 500 cycles>

Discharge capacity retention rate (%) = (discharge capacity after 500 cycles/ initial discharge capacity) × 100,

<Discharge capacity retention rate after 10 days storage>

Discharge capacity retention rate (%) = (discharge capacity after 10 days storage/ initial discharge capacity) × 100.

[Table 1]

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Example 1-1 | 1-1 | LiPF$_6$ | 30 | Li$_3$Fe(C$_2$O$_4$)$_3$ | None | 1 : 0.01 | 3 | 3 | N.D. | 27 |
| Example 1-2 | 1-2 | | 30 | | | 1 : 0.02 | 9 | 6 | N.D. | 25 |
| Example 1-3 | 1-3 | | 30 | | | 1 : 0.2 | 9 | 42 | 18 | 8 |
| Example 1-4 | 1-4 | | 50 | | | 1 : 0.02 | 9 | 9 | N.D. | 44 |
| Example 1-5 | 1-5 | | 50 | | | 1 : 0.2 | 9 | 70 | 27 | 7 |
| Example 1-6 | 1-6 | | 50 | | | 1 : 2.0 | 8 | 67 | 1606 | 9 |
| Example 1-7 | 1-7 | | 100 | | | 1 : 0.2 | 6 | 132 | 54 | 9 |
| Example 1-8 | 1-8 | | 100 | | | 1 : 1.0 | 5 | 128 | 1442 | 6 |
| Example 1-9 | 1-9 | | 100 | | | 1 : 2.0 | 6 | 120 | 3189 | 10 |
| Example 1-10 | 1-10 | | 100 | | | 1 : 3.0 | 4 | 118 | 4938 | 9 |
| Example 1-11 | 1-11 | | 100 | | | 1 : 0.2 | - | 137 | 56 | 9 |

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
| --- | --- | --- | --- | --- | --- | --- | --- | --- | --- | --- |
| | | | | | | | | Concentration of hexafluoro salt [mass ppm] | Concentration of oxalato salt [mass ppm] | Concentration of fluorine ions at about 1 hr after filtration [mass ppm] |
| Example 1-12 | 1-12 | $LiPF_6$, $LiBF_2(C_2O_4)$ | 150 | $Li_2Sn(C_2O_4)_3$ | | 1 : 0.2 | 7 | 135 | 94 | 9 |
| Example 1-13 | 1-13 | | 150 | | | 1 : 2.0 | 6 | 119 | 5724 | 8 |
| Example 1-14 | 1-14 | $LiPF_6$, $LiBF_4$ | 150 | | | 1 : 0.2 | 7 | 134 | 91 | 7 |
| Example 1-15 | 1-15 | | 150 | | | 1 : 2.0 | 7 | 117 | 5715 | 9 |
| Example 1-16 | 1-16 | $LiPF_6$, $LiB(C_2O_4)_2$ | 150 | | | 1 : 0.2 | 6 | 129 | 96 | 7 |
| Example 1-17 | 1-17 | | 150 | | | 1 : 2.0 | 7 | 109 | 5731 | 7 |
| Example 1-18 | 1-18 | $LiPF_6$, | 150 | $Li_2Si(C_2O_4)_3$ | | 1 : 0.2 | 7 | 129 | 80 | 8 |
| Example 1-19 | 1-19 | $LiPF_2(C_2O_4)_2$ | 150 | | | 1 : 2.0 | 7 | 107 | 4427 | 7 |
| Example 1-20 | 1-20 | $LiPF_6$, $LiPO_2F_2$ | 150 | | | 1 : 0.2 | 6 | 131 | 82 | 9 |
| Example 1-21 | 1-21 | | 150 | | | 1 : 2.0 | 7 | 112 | 4429 | 8 |
| Example 1-22 | 1-22 | $LiPF_6$, $LiPF_4(C_2O_4)$ | 150 | | | 1 : 0.2 | 6 | 129 | 79 | 9 |
| Example 1-23 | 1-23 | | 150 | | | 1 : 2.0 | 6 | 110 | 4427 | 8 |

EP 2 860 812 B1

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Example 1-24 | 1-24 | LiPF$_6$, LiN(CF$_3$SO$_2$)$_2$ | 150 | Li$_2$Ge(C$_2$O$_4$)$_3$ | | 1 : 0.2 | 7 | 132 | 83 | 7 |
| Example 1-25 | 1-25 | | 150 | | | 1 : 2.0 | 6 | 111 | 5066 | 9 |
| Example 1-26 | 1-26 | LiPF$_6$, LiN(FSO$_2$)$_2$ | 150 | Li$_2$Ti(C$_2$O$_4$)$_3$ | | 1 : 0.2 | 6 | 131 | 76 | 9 |
| Example 1-27 | 1-27 | | 150 | | | 1 : 2.0 | 7 | 114 | 4708 | 8 |

EP 2 860 812 B1

[Table 2]

| | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Example 1-1 | 1-1 | | | 76 | 52 |
| Example 1-2 | 1-2 | | | 78 | 54 |
| Example 1-3 | 1-3 | | | 76 | 59 |
| Example 1-4 | 1-4 | | | 73 | 53 |
| Example 1-5 | 1-5 | | | 76 | 60 |
| Example 1-6 | 1-6 | | | 76 | 61 |
| Example 1-7 | 1-7 | | | 76 | 59 |
| Example 1-8 | 1-8 | | | 74 | 61 |
| Example 1-9 | 1-9 | | | 77 | 62 |
| Example 1-10 | 1-10 | | | 78 | 63 |
| Example 1-11 | 1-11 | | | 77 | 60 |
| Example 1-12 | 1-12 | $LiCoO_2$ | Graphite | 87 | 76 |
| Example 1-13 | 1-13 | | | 85 | 74 |
| Example 1-14 | 1-14 | | | 83 | 73 |
| Example 1-15 | 1-15 | | | 83 | 72 |
| Example 1-16 | 1-16 | | | 88 | 78 |
| Example 1-17 | 1-17 | | | 87 | 79 |
| Example 1-18 | 1-18 | | | 90 | 83 |
| Example 1-19 | 1-19 | | | 91 | 84 |
| Example 1-20 | 1-20 | | | 84 | 75 |
| Example 1-21 | 1-21 | | | 85 | 76 |

(continued)

| | | Nonaqueous electrolytic solution No. | Cathode active material | Anode active material | Discharge capacity retention rate after 500 cycles [%] | Discharge capacity retention rate after 10 days storage [%] |
|---|---|---|---|---|---|---|
| Example 1-22 | 1-22 | | | | 88 | 81 |
| Example 1-23 | 1-23 | | | | 89 | 80 |
| Example 1-24 | 1-24 | | | | 85 | 74 |
| Example 1-25 | 1-25 | | | | 83 | 74 |
| Example 1-26 | 1-26 | | | | 83 | 75 |
| Example 1-27 | 1-27 | | | | 84 | 74 |

[Examples 1-2 to 1-10]

The concentration of fluorine ions was reduced as in Example 1-1 except that the concentration of fluorine ions in the initial solution and the molar ratio of fluorine ions in the initial solution to $Li_3Fe(C_2O_4)_3$ added to the initial solution were changed as shown in Table 1. Table 1 shows the filterability of the solution after the reduction in concentration of fluorine ions and the concentrations of $Li_3FeF_6$, $Li_3Fe(C_2O_4)_3$, and fluorine ions in the resulting electrolytic solution for a nonaqueous electrolyte battery. The evaluation results of the cycle characteristics and high-temperature storage characteristics of each battery including the electrolytic solution for a nonaqueous electrolyte battery are shown in Table 2 and Figs. 1 and 2.

[Example 1-11]

The same procedure as in Example 1-7 was performed except that the solution after the reduction in concentration of fluorine ions was not filtered. Since the amount of generated $Li_3FeF_6$ was small, the cycle characteristics and high-temperature storage characteristics of the battery were comparable to those in Example 1-7 involving the filtration of the material. The results are shown in Tables 1 and 2 and Figs. 1 and 2.

[Examples 1-12 and 1-13]

In Example 1-12, the same procedure as in Example 1-7 was performed except that $LiBF_2(C_2O_4)$ was further dissolved as a solute at a concentration of 0.5 mol/L, that the concentration of fluorine ions in the initial solution was adjusted to 150 mass ppm, and that $Li_2Sn(C_2O_4)_3$ was used instead of $Li_3Fe(C_2O_4)_3$. In Example 1-13, the same procedure as in Example 1-12 was performed except that the molar ratio of fluorine ions in the initial solution to $Li_2Sn(C_2O_4)_3$ added to the initial solution, fluorine ions : $Li_2Sn(C_2O_4)_3$, was changed to 1 : 2.0. The results are shown in Tables 1 and 2 and Figs. 1 and 2.

[Examples 1-14 to 1-17]

In Examples 1-14 and 1-16, the same procedure as in Example 1-12 was performed except that $LiBF_4$ and $LiB(C_2O_4)_2$ were respectively used instead of $LiBF_2(C_2O_4)$. In Examples 1-15 and 1-17, the same procedure as in Example 1-13 was performed except that $LiBF_4$ and $LiB(O_2O_4)_2$ were respectively used instead of $LiBF_2(C_2O_4)$. The results are shown in Tables 1 and 2 and Figs. 1 and 2.

[Examples 1-18 and 1-19]

In Example 1-18, the same procedure as in Example 1-12 was performed except that $LiPF_2(C_2O_4)_2$ was used instead of $LiBF_2(C_2O_4)$ and that $Li_2Si(C_2O_4)_3$ was used instead of $Li_2Sn(C_2O_4)_3$. In Example 1-19, the same procedure as in Example 1-18 was performed except that the molar ratio of fluorine ions in the initial solution to $Li_2Si(C_2O_4)_3$ added to the initial solution, fluorine ions : $Li_2Si(C_2O_4)_3$, was changed to 1 : 2.0. The results are shown in Tables 1 and 2 and Figs. 1 and 2.

[Examples 1-20 to 1-23]

In Examples 1-20 and 1-22, the same procedure as in Example 1-18 was performed except that $LiPO_2F_2$ and $LiPF_4(C_2O_4)$ were respectively used instead of $LiPF_2(C_2O_4)_2$. In Examples 1-21 and 1-23, the same procedure as in Example 1-19 was performed except that $LiPO_2F_2$ and $LiPF_4(C_2O_4)$ were respectively used instead of $LiPF_2(C_2O_4)_2$. The results are shown in Tables 1 and 2 and Figs. 1 and 2.

[Examples 1-24 and 1-25]

In Example 1-24, the same procedure as in Example 1-12 was performed except that $LiN(CF_3SO_2)_2$ was used instead of $LiBF_2(C_2O_4)$ and that $Li_2Ge(C_2O_4)_3$ was used instead of $Li_2Sn(C_2O_4)_3$. In Example 1-25, the same procedure as in Example 1-24 was performed except that the molar ratio of fluorine ions in the initial solution to $Li_2Ge(C_2O_4)_3$ added to the initial solution, fluorine ions : $Li_2Ge(C_2O_4)_3$, was changed to 1 : 2.0. The results are shown in Tables 1 and 2 and Figs. 1 and 2.

[Examples 1-26 and 1-27]

In Example 1-26, the same procedure as in Example 1-12 was performed except that $LiN(FSO_2)_2$ was used instead of $LiBF_2(C_2O_4)$ and that $Li_2Ti(C_2O_4)_3$ was used instead of $Li_2Sn(C_2O_4)_3$. In Example 1-27, the same procedure as in Example 1-26 was performed except that the molar ratio of fluorine ions in the initial solution to $Li_2Ti(C_2O_4)_3$ added to the initial solution, fluorine ions : $Li_2Ti(C_2O_4)_3$, was changed to 1 : 2.0. The results are shown in Tables 1 and 2 and Figs. 1 and 2.

[Examples 1-28 to 1-30]

The concentration of fluorine ions was reduced as in Example 1-1 except that the concentration of fluorine ions in the initial solution and the molar ratio of fluorine ions in the initial solution to $Li_3Fe(C_2O_4)_3$ added to the initial solution were changed as shown in Table 3. Table 3 shows the filterability of the solution after the reduction in concentration of fluorine ions and the concentrations of $Li_3FeF_6$, $Li_3Fe(C_2O_4)_3$ and fluorine ions in the resulting electrolytic solution for a nonaqueous electrolyte battery. The evaluation results of the cycle characteristics and high-temperature storage characteristics of each battery including the electrolytic solution for a nonaqueous electrolyte battery are shown in Table 4 and Figs. 1 and 2.

[Table 3]

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Example 1-28 | 1-28 | LiPF$_6$ | 200 | Li$_3$Fe(C$_2$O$_4$)3 | None | 1 : 0.2 | 3 | 142 | 106 | 7 |
| Example 1-29 | 1-29 | | 200 | | | 1 : 1.0 | 3 | 123 | 2921 | 9 |
| Example 1-30 | 1-30 | | 200 | | | 1 : 2.0 | 4 | 121 | 6430 | 8 |
| Example 1-31 | 1-31 | | 300 | | | 1 : 0.2 | 0.05 | 139 | 163 | 6 |
| Example 1-32 | 1-32 | | 300 | | | 1 : 1.0 | 0.05 | 121 | 4381 | 9 |
| Example 1-33 | 1-33 | | 400 | | | 1 : 0.2 | 0.03 | 131 | 216 | 10 |
| Example 1-34 | 1-34 | | 400 | | | 1 : 1.0 | 0.02 | 112 | 5838 | 8 |
| Example 1-35 | 1-35 | | 100 | Li$_3$FeF$_2$(C$_2$O$_4$)$_2$ | | 1 : 0.5 | 4 | 135 | 373 | 5 |
| Example 1-36 | 1-36 | | 100 | Li$_3$FeF$_4$(C$_2$O$_4$) | | 1 : 0.8 | 4 | 132 | 375 | 5 |

[Table 4]

| | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Example 1-28 | 1-28 | | | 75 | 59 |
| Example 1-29 | 1-29 | | | 76 | 61 |
| Example 1-30 | 1-30 | | | 76 | 60 |
| Example 1-31 | 1-31 | | | 77 | 58 |
| Example 1-32 | 1-32 | $LiCoO_2$ | Graphite | 76 | 59 |
| Example 1-33 | 1-33 | | | 75 | 60 |
| Example 1-34 | 1-34 | | | 77 | 61 |
| Example 1-35 | 1-35 | | | 75 | 60 |
| Example 1-36 | 1-36 | | | 76 | 61 |

[Examples 1-31 and 1-32]

In Example 1-31, the same procedure as in Example 1-7 was performed except that the concentration of fluorine ions in the initial solution was adjusted to 300 mass ppm. In Example 1-32, the same procedure as in Example 1-31 was performed except that the molar ratio of fluorine ions in the initial solution to $Li_3Fe(C_2O_4)_3$ added to the initial solution, fluorine ions : $Li_3Fe(C_2O_4)_3$, was changed to 1 : 1.0. The results are shown in Tables 3 and 4 and Figs. 1 and 2.

[Examples 1-33 and 1-34]

In Example 1-33, the same procedure as in Example 1-7 was performed except that the concentration of fluorine ions in the initial solution was adjusted to 400 mass ppm. In Example 1-34, the same procedure as in Example 1-33 was performed except that the molar ratio of fluorine ions in the initial solution to $Li_3Fe(C_2O_4)_3$ added to the initial solution, fluorine ions : $Li_3Fe(C_2O_4)_3$, was changed to 1 : 1.0. The results are shown in Tables 3 and 4 and Figs. 1 and 2.

[Examples 1-35 and 1-36]

The concentration of fluorine ions was reduced as in Example 1-1 except that the concentration of fluorine ions in the initial solution, the type of the oxalato salt, and the molar ratio of fluorine ions in the initial solution to the oxalato salt added to the initial solution were changed as shown in Table 3. The results are shown in Tables 3 and 4 and Figs. 1 and 2.

[Examples 1-37 to 1-66]

In Examples 1-37 to 1-53, the concentrations of fluorine ions were reduced as in Examples 1-1 to 1-17, respectively, except that $Li_2Si(C_2O_4)_3$ was used as the oxalat salt. In Examples 1-54 to 1-64, the concentrations of fluorine ions were reduced as in Examples 1-24 to 1-34, respectively, except that $Li_2Si(C_2O_4)_3$ was used as the oxalat salt. In Example 1-65, the concentration of fluorine ions was reduced as in Example 1-35 except that $Li_2SiF_2(C_2O_4)_2$ was used as the oxalat salt. In Example 1-66, the concentration of fluorine ions was reduced as in Example 1-36 except that $Li_2SiF_4(C_2O_4)$ was used as the oxalat salt. The results are shown in Tables 5 and 6 and Figs. 1 and 2.

[Table 5]

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Example 1-37 | 1-37 | LiPF$_6$ | 30 | Li$_2$Si(C$_2$O$_4$)$_3$ | None | 1 : 0.01 | 3 | 2 | N.D. | 27 |
| Example 1-38 | 1-38 | | 30 | | | 1 : 0.02 | 9 | 4 | N.D. | 26 |
| Example 1-39 | 1-39 | | 30 | | | 1 : 0.2 | 9 | 39 | 15 | 7 |
| Example 1-40 | 1-40 | | 50 | | | 1 : 0.02 | 9 | 8 | N.D. | 45 |
| Example 1-41 | 1-41 | | 50 | | | 1 : 0.2 | 9 | 67 | 25 | 6 |
| Example 1-42 | 1-42 | | 50 | | | 1 : 2.0 | 9 | 68 | 1476 | 8 |
| Example 1-43 | 1-43 | | 100 | | | 1 : 0.2 | 7 | 135 | 51 | 7 |
| Example 1-44 | 1-44 | | 100 | | | 1 : 1.0 | 6 | 131 | 1342 | 7 |
| Example 1-45 | 1-45 | | 100 | | | 1 : 2.0 | 7 | 126 | 2958 | 9 |
| Example 1-46 | 1-46 | | 100 | | | 1 : 3.0 | 5 | 121 | 4563 | 8 |
| Example 1-47 | 1-47 | | 100 | | | 1 : 0.2 | - | 138 | 54 | 7 |

EP 2 860 812 B1

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Example 1-48 | 1-48 | LiPF$_6$, LiBF$_2$(C$_2$O$_4$) | 150 | | | 1 : 0.2 | 8 | 136 | 82 | 8 |
| Example 1-49 | 1-49 | | 150 | | | 1 : 2.0 | 8 | 120 | 4431 | 8 |
| Example 1-50 | 1-50 | LiPF$_6$, LiBF$_4$ | 150 | | | 1 : 0.2 | 8 | 135 | 80 | 9 |
| Example 1-51 | 1-51 | | 150 | | | 1 : 2.0 | 7 | 115 | 4427 | 7 |
| Example 1-52 | 1-52 | LiPF$_6$, LiB(C$_2$O$_4$)$_2$ | 150 | | | 1 : 0.2 | 8 | 134 | 82 | 9 |
| Example 1-53 | 1-53 | | 150 | | | 1 : 2.0 | 7 | 118 | 4429 | 7 |
| Example 1-54 | 1-54 | LiPF$_6$, LiN(CF$_3$SO$_2$)$_2$ | 150 | | | 1 : 0.2 | 7 | 137 | 81 | 8 |
| Example 1-55 | 1-55 | | 150 | | | 1 : 2.0 | 6 | 119 | 4435 | 8 |
| Example 1-56 | 1-56 | LiPF$_6$, LiN(FSO$_2$)$_2$ | 150 | | | 1 : 0.2 | 7 | 136 | 82 | 9 |
| Example 1-57 | 1-57 | | 150 | | | 1 : 2.0 | 6 | 120 | 4425 | 9 |
| Example 1-58 | 1-58 | | 200 | | | 1 : 0.2 | 4 | 131 | 101 | 8 |
| Example 1-59 | 1-59 | | 200 | | | 1 : 1.0 | 3 | 126 | 2681 | 7 |

EP 2 860 812 B1

18

| | Nonaqueous electrolytic solution No. | Solute | Concentration of fluorine ions in initial solution [mass ppm] | Oxalato salt | Salt or oxide of metal other than lithium | Fluorine ion: oxalato salt in initial solution [molar ratio] | Filterability [kg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Example 1-60 | 1-60 | LiPF$_6$ | 200 | | | 1 : 2.0 | 3 | 123 | 5908 | 8 |
| Example 1-61 | 1-61 | | 800 | | | 1 : 0.2 | 0.05 | 131 | 157 | 9 |
| Example 1-62 | 1-62 | | 300 | | | 1 : 1.0 | 0.04 | 116 | 4023 | 10 |
| Example 1-63 | 1-63 | | 400 | | | 1 : 0.2 | 0.04 | 132 | 212 | 9 |
| Example 1-64 | 1-64 | | 400 | | | 1 : 1.0 | 0.02 | 113 | 5368 | 10 |
| Example 1-65 | 1-65 | | 100 | Li$_2$SiF$_2$(C$_2$O$_4$)$_2$ | | 1 : 0.5 | 5 | 134 | 273 | 6 |
| Example 1-66 | 1-66 | | 100 | Li$_2$SiF$_4$(C$_2$O$_4$) | | 1 : 0.8 | 4 | 131 | 405 | 5 |

EP 2 860 812 B1

[Table 6]

| | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Example 1-37 | 1-37 | | | 74 | 53 |
| Example 1-38 | 1-38 | | | 75 | 53 |
| Example 1-39 | 1-39 | | | 77 | 58 |
| Example 1-40 | 1-40 | | | 72 | 54 |
| Example 1-41 | 1-41 | | | 77 | 61 |
| Example 1-42 | 1-42 | | | 76 | 60 |
| Example 1-43 | 1-43 | | | 78 | 60 |
| Example 1-44 | 1-44 | | | 76 | 61 |
| Example 1-45 | 1-45 | | | 75 | 63 |
| Example 1-46 | 1-46 | | | 77 | 61 |
| Example 1-47 | 1-47 | $LiCoO_2$ | Graphite | 78 | 62 |
| Example 1-48 | 1-48 | | | 87 | 74 |
| Example 1-49 | 1-49 | | | 86 | 75 |
| Example 1-50 | 1-50 | | | 84 | 73 |
| Example 1-51 | 1-51 | | | 84 | 72 |
| Example 1-52 | 1-52 | | | 89 | 77 |
| Example 1-53 | 1-53 | | | 88 | 78 |
| Example 1-54 | 1-54 | | | 84 | 76 |
| Example 1-55 | 1-55 | | | 85 | 75 |
| Example 1-56 | 1-56 | | | 83 | 74 |
| Example 1-57 | 1-57 | | | 84 | 75 |

(continued)

|  | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Example 1-58 | 1-58 | | | 76 | 61 |
| Example 1-59 | 1-59 | | | 77 | 60 |
| Example 1-60 | 1-60 | | | 77 | 61 |
| Example 1-61 | 1-61 | | | 76 | 58 |
| Example 1-62 | 1-62 | | | 75 | 58 |
| Example 1-63 | 1-63 | | | 74 | 59 |
| Example 1-64 | 1-64 | | | 75 | 58 |
| Example 1-65 | 1-65 | | | 77 | 61 |
| Example 1-66 | 1-66 | | | 78 | 62 |

[Comparative Example 1-1]

The same procedure as in Example 1-7 was performed except that no oxalato salt was added. The concentration of fluorine ions in the resulting electrolytic solution for a nonaqueous electrolyte battery was still 100 mass ppm and was thus not reduced. The cycle characteristics, i.e., the discharge capacity retention rate after 500 cycles at 60°C, of the battery including the electrolytic solution for a nonaqueous electrolyte battery were low. Thus, deterioration of the cell was observed. In addition, the high-temperature storage characteristics, i.e., the discharge capacity retention rate after 10 days storage at 60°C, were low. Thus, deterioration of the cell was observed. The results are shown in Tables 7 and 8 and Figs. 1 and 2.

[Table 7]

| | Nonaqueous electrolytic solution No. | Solute | Concentration of fluorine ions in initial solution [mass ppm] | Oxalato salt | Salt or oxide of metal other than lithium | Fluorine ion:oxalato salt in initial solution [molar ratio] | Filterability fkg/(m²·sec)] | Electrolytic solution for a nonaqueous electrolyte battery | | |
|---|---|---|---|---|---|---|---|---|---|---|
| | | | | | | | | Concentration of hexafluoro salt [mass ppm] | Concentration of oxalato salt [mass ppm] | Concentration of fluorine ions at about 1 hr after filtration [mass ppm] |
| Comparative Example 1-1 | 1-67 | LiPF$_6$ | 100 | None | None | - | 9 | - | - | 100 |
| Comparative Example 1-2 | 1-68 | | 100 | Li$_3$Fe(C$_2$O$_4$)$_3$ | | 1:20 | 1 | 147 | 34852 | 6 |
| Comparative Example 1-3 | 1-69 | | 100 | Li$_2$Si(C$_2$O$_4$)$_3$ | | 1:20 | 1 | 142 | 31942 | 7 |
| Comparative Example 1-4 | 1-70 | | 100 | None | Ca(NO$_3$)$_2$ | - | 3 | - | - | 19 |
| Comparative Example 1-5 | 1-71 | | 100 | | MgSO$_4$ | - | 0.5 | - | - | 16 |
| Comparative Example 1-6 | 1-72 | | 100 | | BaO | - | 0.5 | - | - | 21 |

[Table 8]

| | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Comparative Example 1-1 | 1-67 | | | 58 | 43 |
| Comparative Example 1-2 | 1-68 | | | 67 | 47 |
| Comparative Example 1-3 | 1-69 | $LiCoO_2$ | Graphite | 66 | 48 |
| Comparative Example 1-4 | 1-70 | | | 61 | 42 |
| Comparative Example 1-5 | 1-71 | | | 59 | 43 |
| Comparative Example 1-6 | 1-72 | | | 54 | 39 |

[Comparative Example 1-2]

The same procedure as in Example 1-7 was performed except that the molar ratio of fluorine ions in the initial solution to $Li_3Fe(C_2O_4)_3$ added to the initial solution, fluorine ions : $Li_3Fe(C_2O_4)_3$, was changed to 1 : 20. Although the concentration of fluorine ions in the resulting electrolytic solution for a nonaqueous electrolyte battery was reduced to 50 mass ppm or less, the concentration of $Li_3Fe(C_2O_4)_3$ was, 34852 mass ppm, higher than 6500 mass ppm. The cycle characteristics and high-temperature storage characteristics of the battery including the electrolytic solution for a non-aqueous electrolyte battery were low. Thus, deterioration of the cell was observed. The results are shown in Tables 7 and 8 and Figs. 1 and 2.

[Comparative Example 1-3]

The same procedure as in Comparative Example 1-2 was performed except that $Li_2Si(C_2O_4)_3$ was used as the oxalato salt instead of $Li_3Fe(C_2O_4)_3$. Although the concentration of fluorine ions in the resulting electrolytic solution for a nonaqueous electrolyte battery was reduced to 50 mass ppm or less, the concentration of $Li_2Si(C_2O_4)_3$ was, 31942 mass ppm, higher than 6500 mass ppm. The cycle characteristics and high-temperature storage characteristics of the battery including the electrolytic solution for a nonaqueous electrolyte battery were low. Thus, deterioration of the cell was observed. The results are shown in Tables 7 and 8 and Figs. 1 and 2.

[Comparative Example 1-4]

The same procedure as in Example 1-7 was performed except that $Ca(NO_3)_2$ was added to the initial solution as a salt or oxide of a metal other than lithium instead of addition of the oxalato salt and that the molar ratio of fluorine ions in the initial solution to $Ca(NO_3)_2$ added to the initial solution, fluorine ions : $Ca(NO_3)_2$, was 1 : 0.5. Although the concentration of fluorine ions in the resulting electrolytic solution for a nonaqueous electrolyte battery was reduced to 50 mass ppm or less, the cycle characteristics and high-temperature storage characteristics of the battery including the electrolytic solution for a nonaqueous electrolyte battery were low. Thus, deterioration of the cell was observed. It has been believed that the deterioration was caused by the inside of the battery system contaminated with the metal ions other than lithium, i.e., calcium ions, to cause an irreversible reaction inside the battery. The results are shown in Tables 7 and 8 and Figs. 1 and 2.

[Comparative Example 1-5]

The same procedure as in Example 1-7 was performed except that $MgSO_4$ was added to the initial solution as a salt or oxide of a metal other than lithium instead of addition of the oxalato salt and that the molar ratio of fluorine ions in the initial solution to $MgSO_4$ added to the initial solution, fluorine ions : $MgSO_4$, was 1 : 0.5. Although the concentration of fluorine ions in the resulting electrolytic solution for a nonaqueous electrolyte battery was reduced to 50 mass ppm or less, the cycle characteristics and high-temperature storage characteristics of the battery including the electrolytic solution for a nonaqueous electrolyte battery were low. Thus, deterioration of the cell was observed. It has been believed that the deterioration was caused by the inside of the battery system contaminated with the metal ions other than lithium, i.e., magnesium ions, to cause an irreversible reaction inside the battery. The results are shown in Tables 7 and 8 and Figs. 1 and 2.

[Comparative Example 1-6]

The same procedure as in Example 1-7 was performed except that BaO was added to the initial solution as a salt or oxide of a metal other than lithium instead of addition of the oxalato salt and that the molar ratio of fluorine ions in the initial solution to BaO added to the initial solution, fluorine ions : BaO, was 1 : 0.5. Although the concentration of fluorine ions in the resulting electrolytic solution for a nonaqueous electrolyte battery was reduced to 50 mass ppm or less and the concentration of fluorine ions in the electrolytic solution for a nonaqueous electrolyte battery at about 1 hour after the filtration was 21 mass ppm, the amount of moisture in the electrolytic solution for a nonaqueous electrolyte battery was, 54 mass ppm, high. In addition, the concentration of fluorine ions in the electrolytic solution for a nonaqueous electrolyte battery at about 24 hours after the filtration was, 108 mass ppm, further increased, and the amount of moisture in the electrolytic solution for a nonaqueous electrolyte battery was 6 mass ppm. It was believed that the deterioration was caused by the electrolyte hydrolyzed by the moisture to generate hydrogen fluoride inside the battery and the inside of the battery system contaminated with the metal ions other than lithium, i.e., barium ions, to cause an irreversible reaction inside the battery. The cycle characteristics and high-temperature storage characteristics of the battery including the electrolytic solution for a nonaqueous electrolyte battery were low. Thus, deterioration of the cell was observed. The results are shown in Tables 7 and 8 and Figs. 1 and 2.

[Examples 1-67 to 1-74 and Comparative Examples 1-7 to 1-10]

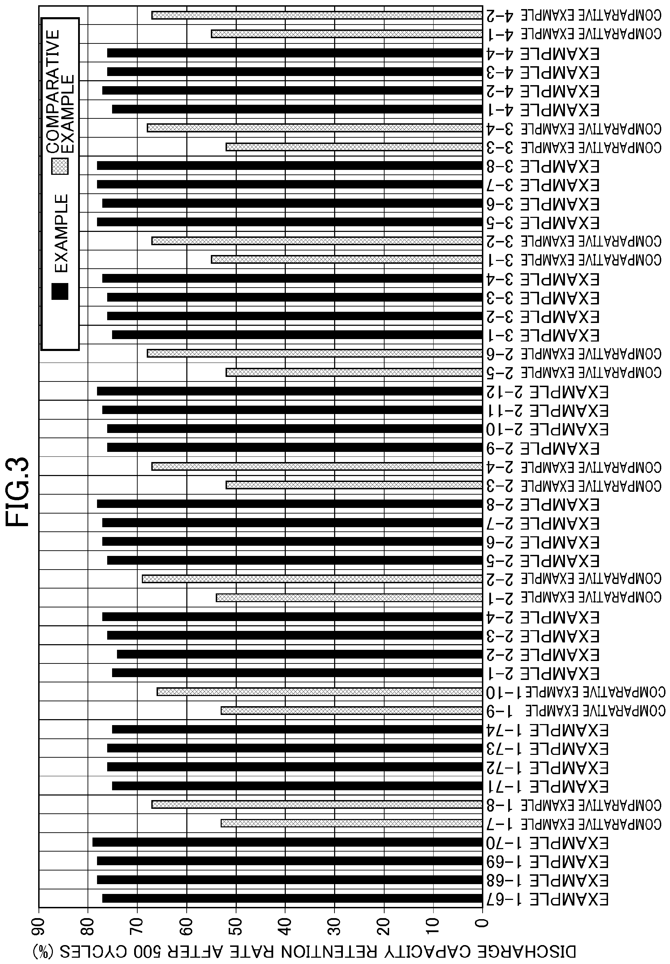

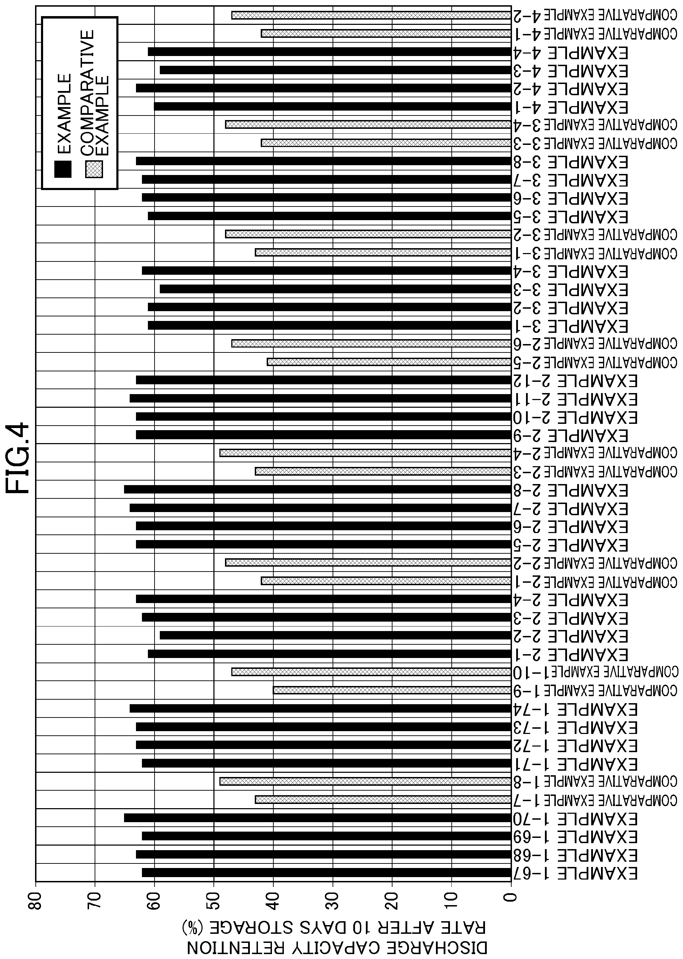

The cycle characteristics and high-temperature storage characteristics of each battery were evaluated by changing the anode body used in Example 1-1 and using any of nonaqueous electrolytic solution Nos. 1-7 to 1-9, 1-44, 1-67 and 1-69 as the electrolytic solution for a nonaqueous electrolyte battery. In Examples 1-67 to 1-70 and Comparative Examples 1-7 and 1-8 using $Li_4Ti_5O_{12}$ as the anode active material, the anode body was produced by mixing 90% by mass of $Li_4Ti_5O_{12}$ powder with 5% by mass of polyvinylidene fluoride (PVDF) as a binder and 5% by mass of acetylene black as a conductive material, further adding N-methylpyrrolidone to the mixture, applying the resulting paste onto copper foil, and drying the applied paste. The battery was evaluated at a charge termination voltage of 2.7 V and a discharge termination voltage of 1.5 V. In Examples 1-71 to 1-74 and Comparative Examples 1-9 and 1-10 using silicon (simple substance) as the anode active material, the anode body was produced by mixing 80% by mass of a silicon powder with 5% by mass of polyvinylidene fluoride (PVDF) as a binder and 15% by mass of acetylene black as a conductive material, further adding N-methylpyrrolidone to the mixture, applying the resulting paste onto copper foil, and drying the applied paste. Each battery was evaluated at the same charge termination voltage and discharge termination voltage as those in Example 1-1. The evaluation results of cycle characteristics and high-temperature storage characteristics of each battery are shown in Table 9 and Figs. 3 and 4.

[Table 9]

| | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Example 1-67 | 1-7 | LiCoO$_2$ | Li$_4$Ti$_5$O$_{12}$ | 77 | 62 |
| Example 1-68 | 1-8 | | | 78 | 63 |
| Example 1-69 | 1-9 | | | 78 | 62 |
| Example 1-70 | 1-44 | | | 79 | 65 |
| Comparative Example 1-7 | 1-67 | | | 53 | 43 |
| Comparative Example 1-8 | 1-69 | | | 67 | 49 |
| Example 1-71 | 1-7 | | silicon (simple substance) | 75 | 62 |
| Example 1-72 | 1-8 | | | 76 | 63 |
| Example 1-73 | 1-9 | | | 76 | 63 |
| Example 1-74 | 1-44 | | | 75 | 64 |
| Comparative Example 1-9 | 1-67 | | | 53 | 40 |
| Comparative Example 1-10 | 1-69 | | | 66 | 47 |
| Example 2-1 | 1-7 | LiNi$_{1/3}$Mn$_{1/3}$Co$_{1/3}$O$_2$ | graphite | 75 | 61 |
| Example 2-2 | 1-8 | | | 74 | 59 |
| Example 2-3 | 1-9 | | | 76 | 62 |
| Example 2-4 | 1-44 | | | 77 | 63 |
| Comparative Example 2-1 | 1-67 | | | 54 | 42 |
| Comparative Example 2-2 | 1-69 | | | 69 | 48 |
| Example 2-5 | 1-7 | | Li$_4$Ti$_5$O$_{12}$ | 76 | 63 |
| Example 2-6 | 1-8 | | | 77 | 63 |
| Example 2-7 | 1-9 | | | 77 | 64 |
| Example 2-8 | 1-44 | | | 78 | 65 |
| Comparative Example 2-3 | 1-67 | | | 52 | 43 |
| Comparative Example 2-4 | 1-69 | | | 67 | 49 |

(continued)

| | Nonaqueous electrolytic solution No. | Cathode active material | Anode active material | Discharge capacity retention rate after 500 cycles [%] | Discharge capacity retention rate after 10 days storage [%] |
|---|---|---|---|---|---|
| Example 2-9 | 1-7 | | | 76 | 63 |
| Example 2-10 | 1-8 | | | 76 | 63 |
| Example 2-11 | 1-9 | | | 77 | 64 |
| Example 2-12 | 1-44 | | silicon (simple substance) | 78 | 63 |
| Comparative Example 2-5 | 1-67 | | | 52 | 41 |
| Comparative Example 2-6 | 1-69 | | | 68 | 47 |
| Example 3-1 | 1-7 | | | 75 | 61 |
| Example 3-2 | 1-8 | | | 76 | 61 |
| Example 3-3 | 1-9 | | | 76 | 59 |
| Example 3-4 | 1-44 | | graphite | 77 | 62 |
| Comparative Example 3-1 | 1-67 | | | 55 | 43 |
| Comparative Example 3-2 | 1-69 | $LiMn_{1.95}Al_{0.05}O_4$ | | 67 | 48 |
| Example 3-5 | 1-7 | | | 78 | 61 |
| Example 3-6 | 1-8 | | | 77 | 62 |
| Example 3-7 | 1-9 | | | 78 | 62 |
| Example 3-8 | 1-44 | | $Li_4Ti_5O_{12}$ | 78 | 63 |
| Comparative Example 3-3 | 1-67 | | | 52 | 42 |
| Comparative Example 3-4 | 1-69 | | | 68 | 48 |
| Example 4-1 | 1-7 | | | 75 | 60 |
| Example 4-2 | 1-8 | | | 77 | 63 |
| Example 4-3 | 1-9 | | | 76 | 59 |
| Example 4-4 | 1-44 | $LiFePO_4$ | graphite | 76 | 61 |
| Comparative Example 4-1 | 1-67 | | | 55 | 42 |
| Comparative Example 4-2 | 1-69 | | | 67 | 47 |

[Examples 2-1 to 2-12 and Comparative Examples 2-1 to 2-6]

The cycle characteristics and high-temperature storage characteristics of each battery were evaluated by changing the anode body and cathode body used in Example 1-1 and using any of nonaqueous electrolytic solution Nos. 1-7 to 1-9, 1-44, 1-67, and 1-69 as the electrolytic solution for a nonaqueous electrolyte battery. The cathode body of which cathode active material was $LiNi_{1/3}Mn_{1/3}Co_{1/3}O_2$ was produced by mixing 90% by mass of $LiNi_{1/3}Mn_{1/3}Co_{1/3}O_2$ powder

with 5% by mass of polyvinylidene fluoride (PVDF) as a binder and 5% by mass of acetylene black as a conductive material, further adding N-methylpyrrolidone to the mixture, applying the resulting paste onto aluminum foil, and drying the applied paste. In Examples 2-1 to 2-4 and Comparative Examples 2-1 and 2-2 using graphite as the anode active material as in Example 1-1, each battery was evaluated at a charge termination voltage of 4.3 V and a discharge termination voltage of 3.0 V. In Examples 2-5 to 2-8 and Comparative Examples 2-3 and 2-4 using $Li_4Ti_5O_{12}$ as the anode active material as in Example 1-67, each battery was evaluated at a charge termination voltage of 2.8 V and a discharge termination voltage of 1.5 V. In Examples 2-9 to 2-12 and Comparative Examples 2-5 and 2-6 using silicon (simple substance) as the anode active material as in Example 1-71, each battery was evaluated at a charge termination voltage of 4.3 V and a discharge termination voltage of 3.0 V. The evaluation results of the cycle characteristics and high-temperature storage characteristics of each battery are shown in Table 9 and Figs. 3 and 4.

[Examples 3-1 to 3-8 and Comparative Examples 3-1 to 3-4]

The cycle characteristics and high-temperature storage characteristics of each battery were evaluated by changing the anode body and cathode body used in Example 1-1 and using any of nonaqueous electrolytic solution Nos. 1-7 to 1-9, 1-44, 1-67 and 1-69 as the electrolytic solution for a nonaqueous electrolyte battery. The cathode body of which cathode active material was $LiMn_{1.95}Al_{0.05}O_4$ was produced by mixing 90% by mass of $LiMn_{1.95}Al_{0.05}O_4$ powder with 5% by mass of polyvinylidene fluoride (PVDF) as a binder and 5% by mass of acetylene black as a conductive material, further adding N-methylpyrrolidone to the mixture, applying the resulting paste onto aluminum foil, and drying the applied paste. In Examples 3-1 to 3-4 and Comparative Examples 3-1 and 3-2 using graphite as the anode active material as in Example 1-1, each battery was evaluated at the same charge termination voltage and discharge termination voltage as those in Example 1-1. In Examples 3-5 to 3-8 and Comparative Examples 3-3 and 3-4 using $Li_4Ti_5O_{12}$ as the anode active material as in Example 1-67, each battery was evaluated at a charge termination voltage of 2.7 V and a discharge termination voltage of 1.5 V. The evaluation results of the cycle characteristics and high-temperature storage characteristics of each battery are shown in Table 9 and Figs. 3 and 4.

[Examples 4-1 to 4-4 and Comparative Examples 4-1 and 4-2]

The cycle characteristics and high-temperature storage characteristics of each battery were evaluated by changing the cathode body used in Example 1-1 and using any of nonaqueous electrolytic solution Nos. 1-7 to 1-9, 1-44, 1-67 and 1-69 as the electrolytic solution for a nonaqueous electrolyte battery. The cathode body of which cathode active material was $LiFePO_4$ was produced by mixing 90% by mass of $LiFePO_4$ powder coated with amorphous carbon with 5% by mass of polyvinylidene fluoride (PVDF) as a binder and 5% by mass of acetylene black as a conductive material, further adding N-methylpyrrolidone to the mixture, applying the resulting paste onto aluminum foil, and drying the applied paste. The evaluation results of the cycle characteristics and high-temperature storage characteristics of each battery at a charge termination voltage of 3.6 V and a discharge termination voltage of 2.0 V are shown in Table 9 and Figs. 3 and 4.

As described above, it was confirmed that the cycle characteristics and high-temperature storage characteristics of the laminate cells including the electrolytic solution for a nonaqueous electrolyte battery of the present invention were excellent in the Examples using $LiNi_{1/3}Mn_{1/3}CO_{1/3}O_2$, $LiMn_{1.95}Al_{0.05}O_4$, or $LiFePO_4$ as the cathode active material, compared with the corresponding Comparative Examples. It was thus demonstrated that a nonaqueous electrolyte battery having excellent cycle characteristics and high-temperature storage characteristics can be obtained by using the electrolytic solution for a nonaqueous electrolyte battery of the present invention, regardless of the type of the cathode active material.

In addition, as described above, it was confirmed that the cycle characteristics and high-temperature storage characteristics of the laminate cells including the electrolytic solution for a nonaqueous electrolyte battery of the present invention were excellent in the Examples using $Li_4Ti_5O_{12}$ or silicon (simple substance) as the anode active material, compared with the corresponding Comparative Examples. It was thus demonstrated that a nonaqueous electrolyte battery having excellent cycle characteristics and high-temperature storage characteristics can be obtained by using the electrolytic solution for a nonaqueous electrolyte battery of the present invention, regardless of the type of the anode active material.

## Claims

1.    An electrolytic solution for a nonaqueous battery comprising a nonaqueous solvent and at least one fluorine-containing lithium salt as a solute,
wherein the content of free fluorine ions is 50 mass ppm or less, **characterized in that** an oxalato salt represented by Formula (1) below is further added to the solution,

wherein the content of a hexafluoro salt represented by Formula (2) below is 150 mass ppm or less;

$$Li_xMF_{(6-2y)} (C_2O_4)_y \qquad (1)$$

$$Li_xMF_6 \qquad (2)$$

wherein M represents Fe, Sn, Si, Ge or Ti; x is 3 when M is Fe, and 2 when M is Sn, Si, Ge or Ti; and y is an integer of 1 to 3, and

wherein the content of the oxalato salt is 6500 mass ppm or less; and further

wherein the oxalato salt represented by formula (1) reacts with free fluorine ions contained in the electrolytic solution to generate the hexafluoro salt represented by formula (2).

2. The electrolytic solution according to Claim 1, wherein the oxalato salt is at least one tris(oxalato) compound selected from the group consisting of $Li_3Fe(C_2O_4)_3$, $Li_2Sn(C_2O_4)_3$, $Li_2Si(C_2O_4)_3$, $Li_2Ge(C_2O_4)_3$ and $Li_2Ti(C_2O4)_3$.

3. The electrolytic solution according to Claim 1 or 2, wherein the solute is at least one lithium salt selected from the group consisting of lithium hexafluorophosphate ($LiPF_6$), lithium tetrafluoroborate ($LiBF_4$), lithium bis(trifluoromethanesulfonyl)imide ($LiN(CF_3SO_2)_2$), lithium bis(fluorosulfonyl)imide ($LiN(FSO_2)_2$), lithium bis(pentafluoroethanesulfonyl)imide ($LiN(C_2F_5SO_2)_2$), lithium difluoro(oxalato)borate ($LiBF_2(C_2O_4)$), lithium difluoro(bis(oxalato))phosphate ($LiPF_2(C_2O_4)_2$), lithium tetrafluoro(oxalato)phosphate ($LiPF_4(C_2O_4)$) and lithium difluorophosphate ($LiPO_2F_2$).

4. The electrolytic solution according to any one of Claims 1 to 3, wherein the nonaqueous solvent is at least one nonaqueous solvent selected from the group consisting of cyclic carbonates, chain carbonates, cyclic esters, chain esters, cyclic ethers, chain ethers, sulfur-containing nonaqueous solvents and ion liquids.

5. A nonaqueous electrolyte battery comprising at least a cathode, an anode and an electrolytic solution for a nonaqueous electrolyte battery comprising a nonaqueous solvent and at least one fluorine-containing lithium salt as a solute, wherein said electrolytic solution for a nonaqueous electrolyte battery is the electrolytic solution according to any one of Claims 1 to 4.

6. A method for producing an electrolytic solution for a nonaqueous electrolyte battery according to any one of Claims 1 to 4, comprising the steps of:

   preparing a solution containing 200 mass ppm or less of free fluorine ions by dissolving at least one fluorine-containing lithium salt as a solute in a nonaqueous solvent; and
   reacting the free fluorine ions in the solution with an oxalato salt represented by Formula (1) by adding the oxalato salt to the solution,

   wherein the oxalato salt represented by formula (1) reacts with free fluorine ions contained in the electrolytic solution to generate the hexafluoro salt represented by formula (2).

7. The method according to Claim 6, wherein the oxalato salt is added to the solution at a molar ratio of the oxalato salt to the free fluorine ions of 0.02 to 2.0.

8. The method according to Claim 6 or 7, further comprising the step of:

   removing the solid content of a reaction product by filtration.

9. The method according to any one of Claims 6 to 8, wherein the oxalato salt is at least one tris(oxalato) compound selected from the group consisting of $Li_3Fe(C_2O_4)_3$, $Li_2Sn(C_2O_4)_3$, $Li_2Si(C_2O_4)_3$, $Li_2Ge(C_2O_4)_3$ and $Li_2Ti(C_2O_4)_3$.

10. The method according to any one of Claims 6 to 9, wherein the solute is at least one lithium salt selected from the group consisting of lithium hexafluorophosphate ($LiPF_6$), lithium tetrafluoroborate ($LiBF_4$), lithium bis(trifluoromethanesulfonyl)imide ($LiN(CF_3SO_2)_2$), lithium bis(fluorosulfonyl)imide ($LiN(FSO_2)_2$), lithium bis(pentafluoroethanesulfonyl)imide ($LiN(C_2F_5SO_2)_2$), lithium difluoro(oxalato)borate ($LiBF_2(C_2O_4)$), lithium difluoro(bis(oxalato))phosphate ($LiPF_2(C_2O_4)_2$), lithium tetrafluoro(oxalato)phosphate ($LiPF_4(C_2O_4)$) and lithium difluorophosphate ($LiPO_2F_2$).

11. The method according to any one of Claims 6 to 10, wherein said nonaqueous solvent is at least one nonaqueous solvent selected from the group consisting of cyclic carbonates, chain carbonates, cyclic esters, chain esters, cyclic ethers, chain ethers, sulfur-containing nonaqueous solvents and ion liquids.

**Patentansprüche**

1. Elektrolytlösung für eine nicht wässrige Batterie, die ein nicht wässriges Lösungsmittel und zumindest ein Fluor enthaltendes Lithiumsalz als gelösten Stoff umfasst,
   wobei der Gehalt an freien Fluorionen 50 Masse-ppm oder weniger beträgt, **dadurch gekennzeichnet, dass** der Lösung darüber hinaus ein Oxalatosalz zugegeben ist, das durch Formel (1) unten dargestellt ist,
   wobei der Gehalt an Hexafluorosalz, das durch die Formel (2) unten dargestellt ist, 150 Masse-ppm oder weniger beträgt;

   $$Li_xMF_{(6-2y)}(C_2O_4)_y \qquad (1)$$

   $$Li_xMF_6 \qquad (2)$$

   wobei M Fe, Sn, Si, Ge oder Ti darstellt; x 3 ist, wenn M Fe ist, und 2, wenn M Sn, Si, Ge oder Ti ist; und y eine ganze Zahl von 1 bis 3 ist, und
   wobei der Gehalt an dem Oxalatosalz 6500 Masse-ppm oder weniger beträgt; und
   wobei ferner das Oxalatosalz, das durch Formel (1) dargestellt ist, mit freien Fluorionen, die in der Elektrolytlösung enthalten sind, reagiert, um das durch Formel (2) dargestellte Hexafluorosalz zu erzeugen.

2. Elektrolytlösung nach Anspruch 1, wobei das Oxalatosalz zumindest eine Tris(oxalato)-Verbindung ist, die aus der Gruppe ausgewählt ist, die aus $Li_3Fe(C_2C)_4)_3$, $Li_2Sn(C_2O_4)_3$, $Li_2Si(C_2O_4)_3$, $Li_2Ge(C_2O_4)_3$ und $Li_2Ti(C_2O_4)_3$ besteht.

3. Elektrolytlösung nach Anspruch 1 oder 2, wobei der gelöste Stoff zumindest ein Lithiumsalz ist, das aus der Gruppe ausgewählt ist, die aus Lithium-hexafluorophosphat ($LiPF_6$), Lithium-tetrafluoroborat ($LiBF_4$), Lithium-bis(trifluo-romethansulfonyl)imid ($LiN(CF_3SO_2)_2$), Lithium-bis(fluorosulfonyl)imid ($LiN(FSO_2)_2$), Lithium-bis(pentafluoroethan-sulfonyl)imid ($LiN(C_2F_5SO_2)_2$), Lithium-difluoro(oxalato)borat ($LiBF_2(C_2O_4)$), Lithium-difluoro(bis(oxalato))phosphat ($LiPF_2(C_2O_4)_2$), Lithium-tetrafluoro(oxalato)-phosphat ($LiPF_4(C_2O_4)$) und Lithium-difluorophosphat ($LiPO_2F_2$) besteht.

4. Elektrolytlösung nach einem der Ansprüche 1 bis 3, wobei das nicht wässrige Lösungsmittel zumindest ein nicht wässriges Lösungsmittel ist, das aus der Gruppe ausgewählt ist, die aus zyklischen Carbonaten, Kettenkarbonaten, zyklischen Estern, Kettenestern, zyklischen Ethern, Kettenethern, Schwefel enthaltenden, nicht wässrigen Lösungsmitteln und ionischen Flüssigkeiten besteht.

5. Nicht wässrige Elektrolytbatterie, die zumindest eine Kathode, eine Anode und eine Elektrolytlösung für eine nicht wässrige Elektrolytbatterie umfasst, mit einem nicht wässrigen Lösungsmittel und zumindest einem Fluor enthaltenden Lithiumsalz als ein gelöster Stoff, wobei die Elektrolytlösung für eine nicht wässrige Elektrolytbatterie die Elektrolytlösung nach einem der Ansprüche 1 bis 4 ist.

6. Verfahren zum Herstellen einer Elektrolytlösung für eine nicht wässrige Elektrolytbatterie nach einem der Ansprüche 1 bis 4, mit den Schritten:

   Zubereiten einer Lösung, die 200 Masse-ppm oder weniger freie Fluorionen enthält, durch Auflösen zumindest eines Fluor enthaltenden Lithiumsalzes als gelöster Stoff in einem nicht wässrigen Lösungsmittel; und
   Reagieren der freien Fluorionen in der Lösung mit einem Oxalatosalz, das durch Formel (1) dargestellt ist, durch Zugeben des Oxalatosalzes zu der Lösung,

   wobei das Oxalatosalz, das durch Formel (1) dargestellt ist, mit freien Fluorionen reagiert, die in der Elektrolytlösung enthalten sind, um das durch Formel (2) dargestellte Hexafluorosalz zu erzeugen.

7. Verfahren nach Anspruch 6, wobei das Oxalatosalz der Lösung in einem molaren Verhältnis des Oxalatosalzes zu den freien Fluorionen von 0,02 bis 2,0 zugegeben wird.

8. Verfahren nach Anspruch 6 oder 7, das ferner den Schritt umfasst: Entnehmen des Feststoffgehalts eines Reaktionsproduktes durch Filtration.

9. Verfahren nach einem der Ansprüche 6 bis 8, wobei das Oxalatosalz zumindest eine Tris(oxalato)-Verbindung ist, die aus der Gruppe ausgewählt ist, die aus $Li_3Fe(C_2O_4)_3$, $Li_2Sn(C_2O_4)_3$, $Li_2Si(C_2O_4)_3$, $Li_2Ge(C_2O_4)_3$ und $Li_2Ti(C_2O_4)_3$ besteht.

10. Verfahren nach einem der Ansprüche 6 bis 9, wobei der gelöste Stoff zumindest ein Lithiumsalz ist, das aus der Gruppe ausgewählt ist, die aus Lithium-hexafluorophosphat ($LiPF_6$), Lithium-tetrafluoroborat ($LiBF_4$), Lithium-bis(trifluoromethansulfonyl)imid ($LiN(CF_3SO_2)_2$), Lithium-bis(fluorosulfonyl)-imid ($LiN(FSO_2)_2$), Lithium-bis(penta-fluoroethansulfonyl)imid ($LiN(C_2F_5SO_2)_2$), Lithium-difluoro(oxalato)borat ($LiBF_2(C_2O_4)$), Lithium-difluoro(bis(oxala-to))phosphat ($LiPF_2(C_2O_4)_2$), Lithium-tetrafluoro(oxalato)-phosphat ($LiPF_4(C_2O_4)$) und Lithium-difluorophosphat ($LiPO_2F_2$) besteht.

11. Verfahren nach einem der Ansprüche 6 bis 10, wobei das nicht wässrige Lösungsmittel zumindest ein nicht wässriges Lösungsmittel ist, das aus der Gruppe ausgewählt ist, die aus zyklischen Carbonaten, Kettencarbonaten, zyklischen Estern, Kettenestern, zyklischen Ethern, Kettenethern, Schwefel enthaltenden nicht wässrigen Lösungsmitteln und ionischen Flüssigkeiten besteht.

## Revendications

1. Solution électrolytique pour une batterie non aqueuse comprenant un solvant non aqueux et au moins un sel de lithium contenant du fluor en tant que soluté, dans laquelle la teneur en ions fluor libres est inférieure ou égale à 50 ppm en masse, **caractérisée en ce que** un sel oxalate représenté par la Formule (1) ci-dessous est en outre ajouté à la solution, dans laquelle la teneur en un sel hexafluoré représenté par la Formule (2) ci-dessous est inférieure ou égale à 150 ppm en masse ;

$$L1_xMF_{(6-2y)}(C_2O_4)_y \qquad (1)$$

$$Li_xMF_6 \qquad (2)$$

où M représente Fe, Sn, Si, Ge ou Ti ; x est égal à 3 lorsque M est Fe et 2 lorsque M est Sn, Si, Ge ou Ti ; et y est un nombre entier allant de 1 à 3, et dans laquelle la teneur en sel oxalate est inférieure ou égale à 6500 ppm en masse ; et en outre dans laquelle le sel oxalate représenté par la Formule (1) réagit avec des ions fluor libres contenus dans la solution électrolytique pour produire le sel hexafluoré représenté par la Formule (2).

2. Solution électrolytique selon la revendication 1, dans laquelle le sel oxalate est au moins un composé tris(oxalato) choisi dans le groupe consistant en $Li_3Fe(C_2O_4)_3$ $Li_2Sn(C_2O_4)_3$, $Li_2Si(C_2O_4)_3$, $Li_2Ge(C_2O_4)_3$ et $Li_2Ti(C_2O_4)_3$.

3. Solution électrolytique selon la revendication 1 ou 2, dans laquelle le soluté est au moins un sel de lithium choisi dans le groupe consistant en l'hexafluorophosphate de lithium ($LiPF_6$), le tétrafluoroborate de lithium ($LiBF_4$), le bis(trifluorométhanesulfonyl)imide de lithium ($LiN(CF_3SO_2)_2$), le bis(fluorosulfonyl)imide de lithium ($LiN(FSO_2)_2$), le bis(pentafluoréthanesulfonyl)imide de lithium ($LiN(C_2F_5SO_2)_2$), le difluoro(oxalato)borate de lihium ($LiBF_2(C_2O_4)$), le difluoro(bis(oxalato)phosphate de lithium ($LiPF_2(C_2O_4)_2$), le tétrafluoro(oxalato)phosphate de lithium ($LiPF_4(C_2O_4)$) et le difluorophosphate de lithium ($LiPO_2F_2$).

4. Solution électrolytique selon l'une quelconque des revendications 1 à 3, dans laquelle le solvant non aqueux est au moins un solvant non aqueux choisi dans le groupe consistant en des carbonates cycliques, des carbonates en chaîne, des esters cycliques, des esters en chaîne, des éthers cycliques, des éthers en chaîne, des solvants non aqueux contenant du soufre et des liquides ioniques.

5. Batterie à électrolyte non aqueux comprenant au moins une cathode, une anode et une solution électrolytique pour une batterie à électrolyte non aqueux comprenant un solvant non aqueux et au moins un sel de lithium contenant du fluor en tant que soluté, où ladite solution électrolytique pour une batterie à électrolyte non aqueux est la solution électrolytique selon l'une quelconque des revendications 1 à 4.

**6.** Procédé pour produire une solution électrolytique pour une batterie à électrolyte non aqueux selon l'une quelconque des revendications 1 à 4, comprenant les étapes qui consistent :

à préparer une solution contenant 200 ppm en masse ou moins d'ions fluor libres en dissolvant au moins un sel de lithium contenant du fluor en tant que soluté dans un solvant non aqueux ; et
à faire réagir les ions fluor libres dans la solution avec un sel oxalate représenté par la Formule (1) en ajoutant le sel oxalate à la solution,

dans lequel le sel oxalate représenté par la Formule (1) réagit avec les ions fluor libres contenus dans la solution électrolytique pour produire le sel hexafluoré représenté par la Formule (2).

**7.** Procédé selon la revendication 6, dans lequel le sel oxalate est ajouté à la solution à un rapport molaire du sel oxalate sur les ions fluor libres allant de 0,02 à 2,0.

**8.** Procédé selon la revendication 6 ou 7, comprenant en outre l'étape qui consiste :

à éliminer la teneur en matière solide d'un produit de réaction par filtration.

**9.** Procédé selon l'une quelconque des revendications 6 à 8, dans lequel le sel oxalate est au moins un composé tris(oxalato) choisi dans le groupe consistant en $Li_3Fe(C_2O_4)_3$ $Li_2Sn(C_2O_4)_3$, $Li_2Si(C_2O_4)_3$, $Li_2Ge(C_2O_4)_3$ et $Li_2Ti(C_2O_4)_3$.

**10.** Procédé selon l'une quelconque des revendications 6 à 9, dans lequel le soluté est au moins un sel de lithium choisi dans le groupe consistant en l'hexafluorophosphate de lithium ($LiPF_6$), le tétrafluoroborate de lithium ($LiBF_4$), le bis(trifluorométhanesulfonyl)imide de lithium ($LiN(CF_3SO_2)_2$), le bis(fluorosulfonyl)imide de lithium ($LiN(FSO_2)_2$), le bis(pentafluoréthanesulfonyl)imide de lithium ($LiN(C_2F_5SO_2)_2$), le difluoro(oxalato)borate de lihium ($LiBF_2(C_2O_4)$), le difluoro (bis(oxalato)phosphate de lithium ($LiPF_2(C_2O_4)_2$), le tétrafluoro(oxalato)phosphate de lithium ($LiPF_4(C_2O_4)$) et le difluorophosphate de lithium ($LiPO_2F_2$).

**11.** Procédé selon l'une quelconque des revendications 6 à 10, dans lequel ledit solvant non aqueux est au moins un solvant non aqueux choisi dans le groupe consistant en des carbonates cycliques, des carbonates en chaîne, des esters cycliques, des esters en chaîne, des éthers cycliques, des éthers en chaîne, des solvants non aqueux contenant du soufre et des liquides ioniques.

FIG.1

EXAMPLE ■
COMPARATIVE EXAMPLE

DISCHARGE CAPACITY RETENTION RATE AFTER 500 CYCLES (%)

EXAMPLE 1-1
EXAMPLE 1-10
EXAMPLE 1-20
EXAMPLE 1-30
EXAMPLE 1-40
EXAMPLE 1-50
EXAMPLE 1-60
EXAMPLE 1-66
COMPARATIVE EXAMPLE 1-1
COMPARATIVE EXAMPLE 1-6

EP 2 860 812 B1

# FIG.2

EP 2 860 812 B1

# FIG.3

FIG.4

EP 2 860 812 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2983580 B
- JP 2950924 B
- JP 3077218 B

- JP 2002343364 A
- US 2006269844 A1
- JP 2004111349 A